# EUROPÄISCHE PATENTSCHRIFT

(11) **EP 2 507 091 B1**
(45) Veröffentlichungstag und Bekanntmachung des Hinweises auf die Patenterteilung: **05.10.2016**
(21) Anmeldenummer: 10795928.0
(22) Anmeldetag: 06.12.2010
(51) Int. Cl.: B60N 3/00

(54) **KLAPPTISCH ZUR ANBRINGUNG AN DER RÜCKSEITE EINES FAHRZEUGSITZTEILS**
FOLDING TABLE FOR ATTACHMENT TO THE REAR SIDE OF A VEHICLE SEAT PART
TABLE REPLIABLE À PLACER SUR L'ARRIÈRE D'UNE PARTIE DE SIÈGE DE VÉHICULE

(30) Priorität: 04.12.2009 DE 102009056930; 08.02.2010 DE 102010007297; 29.09.2010 DE 102010046871
(43) Veröffentlichungstag der Anmeldung: 10.10.2012
(73) Patentinhaber: Kinetix AG, 8750 Glarus (CH)
(72) Erfinder: ACKERET, Peter, CH - 8048 Zürich (CH); KELLER, Michael, Andreas, 72250 Freudenstadt (DE)
(74) Vertreter: DREISS Patentanwälte PartG mbB
(86) Internationale Anmeldenummer: PCT/EP2010/007392
(87) Internationale Veröffentlichungsnummer: WO 2011/066994

(56) Entgegenhaltungen:
- WO-A2-2008/131944
- DE-T2- 69 604 646
- FR-A1- 2 758 506
- US-A- 5 370 060
- US-B1- 7 281 762

## Beschreibung

Die Erfindung betrifft einen Klapptisch zur Anbringung an der Rückseite eines Fahrzeugsitzteils, wie eine Rückenlehne, eine Kopfstütze oder eine Kopfstützenhalterung eines Fahrzeugsitzes.

Klapptische, angebracht an einer Rückseite einer Rückenlehne eines Fahrzeugsitzes sind insbesondere in Bussen oder grösseren Personenwagen weit verbreitet und werden meist schon beim Fahrzeughersteller eingebaut.

Derartige Klapptische sind meist mittels eines Schwenkgelenks an der Rückseite der Rückenlehne angeordnet. Sie lassen sich aus einer Nichtgebrauchslage, in der sie im Wesentlichen an der Rückseite der Rückenlehne anliegen, in eine Gebrauchslage, in der sie in etwa horizontal von der Rückseite der Rückenlehne abstehen, und umgekehrt schwenken.

Kann die Neigung der Rückenlehnen verstellt werden, so muss der Neigungswinkel zwischen der Rückenlehne und der Tischplatte bzw. der Anschlag, der die Gebrauchsstellung der Tischplatte definiert, verstellbar sein, so dass die Tischplatte bei unterschiedlicher Neigung der Rückenlehne ihre horizontale Stellung in der Gebrauchslage beibehält.

Da die Tischplatte in der Gebrauchsalge sehr stabil an der Rückenlehne abgestützt sein muss, ist dazu eine relativ aufwendige Gelenkmechanik erforderlich, die auch bezüglich Bedienungsfreundlichkeit zu wünschen übrig lässt.

Um bei in der Neigung verstellbarer Rückenlehne ein Mitschwenken des Klapptisches zu vermeiden, sind auch Lösungen bekannt, bei denen seitliche Streben als Klapptischhalter vorgesehen sind, die an einem feststehenden Teil des Fahrzeugsitzes angebracht sind und daher nicht mit der Rückenlehne mitschwenken.
Diese Lösungen bedingen jedoch Eingriffe an den Fahrzeugsitzen und sind daher nur für die Erstausrüstungen ab Werk geeignet.
Um auch Fahrzeuge ohne werkseitig eingebaute Klapptische mit Klapptischen ausrüsten zu können, werden auch Klapptische zum Nachrüsten auf dem Markt angeboten. Diese sind sehr praktisch, weil sie nur bei Bedarf an den Sitzen montiert und bei Nichtgebrauch wieder von den Sitzen entfernt werden können. Die angebotenen Klapptische zum Nachrüsten sind aber meist sehr unhandlich zum Anbringen an den Fahrzeugsitzen und instabil im Gebrauch, da für deren Anbringung in der Regel keine werkseitigen Vorkehrungen getroffen worden sind. Zudem müssen solche Klapptische zum Nachrüsten eine grosse Vielfalt an Fahrzeugmodellen mit unterschiedlichsten Einbausituationen abdecken. Die Rückenlehnen, an denen solche Klapptische befestigt werden, weisen oft unterschiedliche Höhen und Konturen auf und die Positionen und Stellungen der Tischplatten solcher Klapptisch können durch Verstellen von Sitzhöhe und Neigung der Rückenlehne zusätzlich stark variieren.
Zudem sind auch die Rücksitze, von denen aus solche Klapptische benutzt werden, in verschiedenen Fahrzeugmodellen unterschiedlich hoch und die Benutzer solcher Klapptische unterschiedlich gross.

Ein Klapptisch mit einer einstellbaren Abstützung an der Rückseite eines Fahrzeugsitzteils ist aus der DE69604646 bekannt.

Der Erfindung liegt die Aufgabe zugrunde, einen Klapptisch der eingangs genannten Art so auszubilden, dass er einfach, schnell und stabil auf der Rückseite von Fahrzeugsitzen mit unterschiedlichen Abmessungen Konturen und Sitzeinstellungen angebracht und entfernt werden kann.
Diese Aufgabe wird erfindungsgemäss durch einen Klapptisch zur Anbringung auf der Rückseite eines Fahrzeugsitzteils, wie eine Rückenlehne, Kopfstütze oder Kopfstützenhalterung eines Fahrzeugsitzes, mit den Merkmalen des unabhängigen Anspruchs gelöst. Vorteilhafte Weiterbildungen der Erfindung sind in den abhängigen Ansprüchen definiert.

Gemäss einem ersten Aspekt der Erfindung wird ein Klapptisch vorgeschlagen, umfassend eine Befestigungseinrichtung zum Befestigen des Klapptischs an dem Fahrzeugsitzteil und ein mit der Befestigungseinrichtung verbundenes Trägerelement, das sich von der Befestigungseinrichtung nach unten erstreckt sowie eine am unteren Ende des Trägerelements über ein erstes Gelenk drehbar mit dem Trägerelement verbundene Tischplatte, die zwischen einer Nichtgebrauchsstellung, in der die Tischplatte in etwa parallel zum Trägerelement ausgerichtet ist, und einer Gebrauchsstellung, in der die Tischplatte mit dem Trägerelement einen Winkel von etwa 80° bis 120° einschliesst, hin- und zurück schwenkbar ist, wobei das Trägerelement über ein zweites Gelenk, dessen Drehachse parallel zur Drehachse des ersten Gelenks verläuft, mit der Befestigungseinrichtung verbunden ist, und wobei an der Tischplatte Abstützelemente angeordnet sind, die in der Gebrauchsstellung der Tischplatte mit einem gemeinsamen Betätigungsorgan in Richtung gegen das Fahrzeugsitzteil beweglich und mit einer manuell lösbaren Rastvorrichtung in unterschiedlichen Stellungen feststellbar sind, so dass die Tischplatte in eine horizontale Lage ausgerichtet werden kann und am Fahrzeugsitzteil gegen Belastungen abgestützt ist.

Durch diese Ausgestaltung kann der Klapptisch auf einfache und schnelle Art an unterschiedliche Neigungen der Rückenlehne angepasst werden.

Die Schwerpunktlage bewirkt, dass das Trägerelement mit der Tischplatte um die Drehachse des zweiten Gelenks gegen die Rückseite der Rückenlehne schwenkt, bis das Trägerelement an dieser anliegt.

Das Stützelement kann soweit aus der Tischplatte gegen die Rückseite der Rückenlehne bewegt werden, bis die Tischplatte horizontal ausgerichtet ist. Je nach Neigung der Rückenlehne wird dazu das Stützelement mehr oder weniger weit aus der Tischplatte hinausbewegt und festgestellt, so dass das Stützelement zusätzlich die Tischplatte in der eingestellten Horizontallage an der Rückenlehne gegen Belastungen abstützt und stabilisiert.

Zur stabilen Abstützung der Tischplatte an der Rückenlehne sind vorzugsweise zwei Abstützelemente vorgesehen, die bezüglich Mitte der hinteren Stirnseite der Tischplatte symmetrisch angeordnet sind. Die Abstützelemente können drehbar oder linear verschiebbar an der Tischplatte gelagert und über ein separates Betätigungsorgan bewegt werden.

Gemäss einer bevorzugten Ausführungsform bilden die Abstützelemente und das Betätigungsorgan gemeinsam ein einteiliges Stützelement, das in einer Linearführung auf der Unterseite der Tischplatte geführt wird.

In einer weiteren Ausführungsform ist vorgesehen, dass das Stützelement in einer senkrecht zur hinteren Stirnseite der Tischplatte ausgerichteten Linearführung an der Tischplatte geführt ist. Dabei können eine, vorzugsweise mittig angeordnete, oder zwei parallel angeordnete Führungen angeordnet sein.

Vorzugsweise sind an der Tischplatte Ausnehmungen oder Aufnahmeräume vorgesehen, in denen das Stützelement in der Nichtgebrauchsstellung aufgenommen ist. Diese können im Innern der Tischplatte oder als muldenförmige Vertiefungen oder als Ausschnitt an der Aussenseite der Tischplatte angeordnet sein.

In einer bevorzugten Ausführungsform ist eine nach aussen offene U-förmige Führungsschiene mittig auf der Unterseite der Tischplatte angeordnet in der das Stützelement fluchtend mit der Aussenseite der Tischplatte geführt ist.

In einer Weiterbildung ist das Stützelement T-förmig ausgebildet, mit einem Führungsschaft, der in einer mittig an der Tischplatte angeordneten Führungsschiene geführt ist, und einer an dem gegen das Fahrzeugsitzteil gerichteten Ende quer zum Führungsschaft ausgerichteten Abstützplatte, die sich auf beiden Seiten des Führungsschafts etwa gleich weit in Richtung der seitlichen Stirnseiten der Tischplatte erstreckt und an deren freien Enden Abstützelemente angeordnet sind, die sich am Fahrzeugsitzteil abstützen.

Das Trägerelement ist vorzugsweise am oberen Ende mittig mit der Befestigungseinrichtung verbunden, wodurch sich zusammen mit den beiden an den Enden der Abstützplatte angebrachten Abstützelementen eine stabile 3-Punkt Auflage ergibt.

Die Abstützelemente ragen vorzugsweise über die Abstützplatte hinaus, wodurch sichergestellt wird, dass beide Abstützelemente Kontakt mit dem Fahrzeugsitzteil haben, auch wenn dessen Aussenkontur gewölbt ist.

Zur Vermeidung von Beschädigungen an den Rückseiten der Fahrzeugsitzteile sind die Abstützelement vorzugsweise mit gerundeten und/oder flexiblen Abstützflächen, die sich den unterschiedlichen Konturen anpassen, versehen.

Das Stützelement könnte auch als U-förmiger Bügel ausgebildet sein, dessen beiden Schenkel die Führungen bilden, die in der Tischplatte geführt werden und dessen Basis die Andruckplatte bildet.

In einer bevorzugten Ausgestaltung der Erfindung ist das Stützelement mit einer Rastvorrichtung versehen, mit einer an der Tischplatte angeordneten Zahnstange, die sich in etwa über den Ausfahrweg des Stützelements erstreckt und einem am Stützelement angeordneten Verriegelungselement, welches unter Federkraft in Eingriff mit der Zahnstange steht und mittels einer Lösetaste ausser Eingriff mit der Zahnstange gebracht werden kann.

In einer Weiterbildung könnte die Rastvorrichtung am Stützelement auch als Rastgesperre ausgebildet sein, so dass das Stützelement ohne Betätigung der Lösetaste aus der Tischplatte ausschiebbar wäre und die Lösetaste nur zum Zurückschieben in die Tischplatte betätigt werden müsste.

Die Lösetaste ist vorzugsweise nahe dem hinteren Ende des Führungsschafts angeordnet, zusammen mit einer Griffleiste, mit der das Stützelement nach Betätigung der Lösetaste in beide Richtungen verschoben werden kann.
Auf der Unterseite der Tischplatte ist vorzugsweise ein Ausschnitt vorgesehen, in dem die Lösetaste und die Griffleiste auf dem gesamten Verschiebeweg zugänglich sind.

Gemäss einer nicht erfindungsgemäßen Ausführung wird ein Klapptisch vorgeschlagen, umfassend eine Befestigungseinrichtung zum Befestigen des Klapptischs an dem Fahrzeugsitzteil und ein mit der Befestigungseinrichtung verbundenes Trägerelement, das sich von der Befestigungseinrichtung nach unten erstreckt sowie eine am unteren Ende des Trägerelements über ein erstes Gelenk drehbar mit dem Trägerelement verbundene Tischplatte, die zwischen einer Nichtgebrauchsstellung, in der die Tischplatte in etwa parallel zum Trägerelement ausgerichtet ist, und einer Gebrauchsstellung, in der die Tischplatte mit dem Trägerelement einen Winkel von etwa 80° bis 120° einschliesst, hin- und zurück schwenkbar ist, wobei das Trägerelement über einen Verstellschlitten mit der Befestigungseinrichtung verbunden ist, so dass der Abstand zwischen der Tischplatte und der Befestigungseinrichtung verstellbar ist.
Durch diese Ausgestaltung kann die Höhe der Tischplatte durch den Benutzer auf einfache und schnelle Art an unterschiedliche Höhen und Einstellungen der Rückenlehne sowie an unterschiedliche Grössen und Bedürfnisse der Benutzer angepasst werden.
Gemäss einer bevorzugten Ausführungsform ist zur Höhenverstellung der Tischplatte auf der Rückseite des Trägerelements ein sich vertikal im Wesentlichen über die Höhe des Trägerelements erstreckender oben offener Führungskanal angeordnet, in dem ein linear verschiebbarer Verstellschlitten gelagert ist, der mittels einer manuell lösbaren Verriegelungseinrichtung in unterschiedlichen Positionen festgestellt und zur platzsparenden Aufbewahrung des Klapptisches vollständig in den Führungskanal eingeschoben werden kann.

Der Führungskanal ist bevorzugt in der Mitte des als Hohlkörper ausgebildeten Trägerelements angeordnet und soweit in den Innenraum eingelassen, dass die Aussenkonturen des Verstellschlittens in etwa mit den Aussenkonturen des Trägerelements fluchten. An den gegeneinander gerichteten Seitenwänden des vorzugsweise U-förmig ausgebildeten Führungskanals sind Zahnschienen für die Verriegelungseinrichtung angeordnet

Der Verstellschlitten ist vorzugsweise am oberen Ende über ein zweites Gelenk, dessen Drehachse parallel zur Drehachse des ersten Gelenks verläuft, mit der Befestigungseinrichtung verbunden.

In einer Weiterbildung ist am oberen Ende des Verstellschlittens ein Steckelement angelenkt, mit dem der Klapptisch lösbar mit der Befestigungseinrichtung gekuppelt werden kann. Im Verstellschlitten ist vorzugsweise ein Aufnahmeraum vorgesehen, in den das Steckelement zur platzsparenden Aufbewahrung des Klapptisches eingeklappt werden kann.

Gemäss einer Weiterbildung ist am unteren Ende des Verstellschlittens ein Querträger angeordnet, in dem die Verriegelungseinrichtung untergebracht ist. In einer bevorzugten Ausführungsform umfasst die Verriegelungseinrichtung zwei Sperrriegel, die mit einer Sperrfeder quer zur Verschieberichtung des Verstellschlittens in Eingriff mit den an den Seitenwänden des Führungskanals angeordneten Zahnschienen gehalten werden. Die Sperrriegel werden vorzugsweise über eine gemeinsame Verschlusstaste, welche über den Sperrriegeln angeordnet ist und die Aussenseite des Querträgers bildet, ausser Eingriff mit der Zahnschiene gebracht, so dass die Verriegelung gelöst und der Verstellschlitten verschoben werden kann.

In einer bevorzugten Ausführungsform kann das Trägerelement um das zweite Gelenk soweit nach oben geschwenkt werden, dass die Verschlusstaste vom Benutzer bequem erreicht und die Höhenverstellung ohne Entfernung des Klapptisches vom Fahrzeugsitz bequem vorgenommen werden kann.

Gemäss einer nicht erfindungsgemäßen Ausführung wird ein Klapptisch vorgeschlagen, umfassend eine Befestigungseinrichtung zum Befestigen des Klapptischs an dem Fahrzeugsitzteil und ein mit der Befestigungseinrichtung verbundenes Trägerelement, das sich von der Befestigungseinrichtung nach unten erstreckt sowie eine am unteren Ende des Trägerelements über ein erstes Gelenk drehbar mit dem Trägerelement verbundene Tischplatte, die zwischen einer Nichtgebrauchsstellung, in der die Tischplatte in etwa parallel zum Trägerelement ausgerichtet ist, und einer Gebrauchsstellung, in der die Tischplatte mit dem Trägerelement einen Winkel von etwa 80° bis 120° einschliesst, hin- und zurück schwenkbar ist, wobei an der Tischplatte eine Überlastsicherung, die ein Schwenken der Tischplatte aus der Gebrauchsstellung nach unten zulässt, wenn die Tischplatte überlastet wird, sowie ein Stützelement zum Abstützen der Tischplatte am Fahrzeugsitzteil, das in der Gebrauchsstellung der Tischplatte in Richtung gegen das Fahrzeugsitzteil beweglich und in unterschiedlichen Stellungen feststellbar ist, angeordnet sind, und wobei das Stützelement über eine Halterung mit der Tischplatte verbunden ist, die sich bei einer durch das Wegschwenken der Tischplatte ergebenden Krafteinwirkung auf das Stützelement löst, so dass die Wegschwenkbewegung der Tischplatte nach unten nicht durch das Stützelement behindert wird.
Diese Ausgestaltung hat den Vorteil, dass durch eine Überlastsicherung sichergestellt wird, dass ein Überschreiten der Grenzbelastung der Tischplatte zu keiner Beschädigung am Klapptisch oder am Fahrzeugsitz oder im Falle eines Unfalls zu Verletzungen der Insassen führen kann.
Gemäss einer bevorzugten Ausführungsform wird das erste Gelenk durch zwei axial fluchtende Gelenkabschnitte gebildet. Am unteren Ende des Trägerelements sowie am hinteren Ende der Tischplatte sind vorzugsweise Gelenkfortsätze ausgebildet, die ineinander greifen und hohlzylinderförmige innere und äussere Aufnahmeräume für erste und zweite Rastbolzen bilden, die mit Druckfedern gegeneinander gedrückt werden.

Vorzugsweise sind die ersten und zweiten Rastbolzen spiegelsymmetrisch aufgebaut, so dass sie für beide Gelenkabschnitte verwendet werden können. Beide Rastbolzen weisen vorzugsweise zylindrische Mantelflächen auf und bilden so die Drehachsen des ersten Gelenks.

An einem der Rastbolzen sind vorzugsweise axial ausgerichtete Längsrippen an der Mantelfläche angeordnet, die mit entsprechend an der inneren Mantelfläche des Aufnahmeraums angeordneten axial ausgerichteten Gegenrippen kämmen, so dass der Rastbolzen gegen Verdrehen gesichert ist und sich im Aufnahmeraum axial verschieben kann.

Auf der Mantelfläche des anderen Rastbolzens sind vorzugsweise axial ausgerichtete Anschlagsrippen angeordnet, die mit axial ausgerichteten Gegenrippen auf der inneren Mantelfläche des Aufnahmeraums einen Anschlag zur Begrenzung des Drehwinkels bilden, wobei die freie Stirnseite des Rastbolzens vorzugsweise als Konus ausgebildet ist, der in einer an der inneren Stirnseite des Aufnahmeraums konisch ausgebildeten Lagerschale gelagert ist, die einen Anschlag für die axiale Bewegung des Rastbolzens und eine Reibungsbremse zur Hemmung der Drehbewegung des Rastbolzens bildet.

Gemäss einer bevorzugten Ausführungsform sind an den gegeneinander gerichteten Stirnseiten der beiden Rastbolzen Kupplungsklauen und Klauentaschen angeordnet, die ineinander greifen und eine Klauenkupplung bilden, wobei die Flanken der Kupplungsklauen und der Klauentaschen konisch ausgebildet sind, so dass beim Überschreiten einer bestimmten Grenzlast der Tischplatte und entsprechendem Anstieg des Drehmoments die beiden Rastbolzen gegen die Kraft der Druckfeder soweit auseinander gedrückt werden, bis sich die Klauenkupplung löst und die Tischplatte aus der Gebrauchsstellung nach unten wegklappen kann.

In einer bevorzugten Ausführungsform umfasst die Halterung, mit der das Stützelement mit der Tischplatte verbunden ist, einen Führungsschlitten, der in einer Führungsschiene an der Tischplatte geführt ist, wobei das Stützelement mit seinem hinteren Ende am hinteren Ende des Führungsschlittens angelenkt ist und am vorderen Ende des Führungsschlittens mit einer Federklammer lösbar gehalten wird, so dass das Stützelement bei entsprechender Krafteinwirkung aus der Federklammer gedrückt wird und um die Schwenkachse nach unten wegschwenken kann.

In einer weiteren bevorzugten Ausführungsform ist das Trägerelement über eine Kupplung mit manuell lösbarer Verriegelungsvorrichtung mit der Befestigungseinrichtung verbunden, wobei die Kupplung eine an einem Befestigungselement angeordnete Aufnahmebuchse sowie ein mit dem Trägerelements vorzugsweise über das zweite Gelenk verbundenes Steckelement umfasst, das in die Aufnahmebuchse eingesteckt und verriegelt werden kann.

Das Befestigungselement ist in einer bevorzugten Ausführungsform als Spannelement ausgebildet, das zwischen den beiden Stangen der Kopfstützenhalterung eingespannt werden kann, wobei die Aufnahmebuchse in etwa mittig am Spannelement angeordnet ist.

In einer weiteren Ausführungsform ist am oberen Ende des Trägerelements ein Verschlusselement angeordnet ist, mit dem die Tischplatte in der Nichtgebrauchsstellung an ihrer vorderen Stirnseite am Trägerelement festgehalten wird.

Vorzugsweise ist das Trägerelement am oberen Ende gegen die Tischplatte gewölbt und überdeckt die vordere Stirnseite der Tischplatte in der Nichtgebrauchsstellung, wobei das Verschlusselement aus einer Öffnung in der gewölbten Innenseite des Trägerelements herausragt und in eine an der Stirnseite der Tischplatte angeordnete Ausnehmung eingreift.

In einer weiteren bevorzugten Ausführungsform ist auf der Vorderseite des Trägerelements ein ausklappbarer Cup-Holder angeordnet, der von einer Nichtgebrauchsstellung, in der er in einer schalenförmigen Ausnehmung im Trägerelement aufgenommen ist, in eine in etwa parallel zur Tischplatte ausgerichtete Gebrauchsstellung geklappt werden kann, wobei ein federbeaufschlagtes Rastelement den Cup-Holder in die Nichtgebrauchsstellung und in die Gebrauchsstellung vorspannt und fixiert.

Vorzugsweise kann der Cup-Holder bei Überlast aus der Gebrauchsstellung gegen die Tischplatte nach unten wegschwenken.

Weitere bevorzugte Ausgestaltungen der Erfindung ergeben sich aus den übrigen, in den Unteransprüchen genannten Merkmalen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend in Ausführungsbeispielen anhand der zugehörigen Zeichnungen näher erläutert. Es zeigen:
- Fig. 1: zeigt eine Perspektivansicht einer ersten Variante des erfindungsgemässen Klapptischs in der Nichtgebrauchsstellung mit ausgeklapptem Steckelement, separat von dem an der Kopfstützenhalterung eines Fahrzeugsitzes angeschlossenen Befestigungselement.
- Fig. 2: zeigt eine Perspektivansicht des Klapptischs gemäß Fig. 1, verbunden mit dem Befestigungselement in der Gebrauchsstellung und dem Cup-Holder in der Gebrauchsstellung.
- Fig. 3: zeigt eine Ansicht von oben auf den erfindungsgemässen Klapptisch gemäß Fig. 2, ohne Befestigungselement mit ausgeklapptem Steckelement und einer ersten Variante des CupHolders in der Gebrauchsstellung.
- Fig. 4: zeigt eine Ansicht von oben auf den erfindungsgemässen Klapptisch gemäß Fig. 2, ohne Befestigungselement mit ausgeklapptem Steckelement und einer zweiten Variante des Cup-Holders in der Gebrauchsstellung.
- Fig. 5: zeigt einen Querschnitt einer zweiten Variante des erfindungsgemässen Klapptischs, angebracht mit der Befestigungseinrichtung an der Kopfstützenhalterung eines Fahrzeugsitzes in der Gebrauchsstellung und mit ausgefahrenem Stützelement.
- Fig. 6: zeigt eine teilweise geschnittene Detailansicht der Tischplatte des Klapptischs gemäß Fig. 5 von oben mit ein- und ausgefahrenem Stützelement und dem Cup-Holder in der Gebrauchsstellung.
- Fig. 7: zeigt eine Perspektivansicht einer dritten Variante des erfindungsgemässen Klapptischs separat vom Fahrzeugsitz von vorne, in der Nichtgebrauchsstellung mit eingeklapptem Steckelement und eingefahrenem Stützelement.
- Fig. 8: zeigt den Klapptisch gemäß Fig. 7, angebracht mit der Befestigungseinrichtung an einem Fahrzeugsitz in der Gebrauchsstellung und mit dem Cup-Holder in der Gebrauchsstellung.
- Fig. 9: zeigt eine Perspektivansicht des Klapptischs gemäß Fig. 7 von hinten.
- Fig. 10: zeigt eine Perspektivansicht des Klapptischs gemäß Fig. 8 separat vom Fahrzeugsitz in der Gebrauchsstellung von hinten, mit ausgeklapptem Steckelement und ausgefahrenem Stützelement.
- Fig.11: zeigt in einer Perspektivansicht Details der Höhenverstellung mit Verstellschlitten und Steckelement.
- Fig. 12: zeigt einen Querschnitt durch die Rastvorrichtung des Verstellschlittens.
- Fig. 13: zeigt eine Perspektivansicht einer vierten Variante des erfindungsgemässen Klapptischs von vorne, in der Nichtgebrauchsstellung mit dem Verstellschlitten in der untersten Stellung und eingeklapptem Steckelement sowie mit eingefahrenem Stützelement.
- Fig. 14: zeigt eine Perspektivansicht des Klapptischs gemäss Fig. 13 von hinten.
- Fig. 15: zeigt eine Perspektivansicht des Klapptischs gemäss Fig. 13 in der Gebrauchsstellung von vorne, mit dem Verstellschlitten in der obersten Stellung und ausgeklapptem Steckelement sowie ausgeklapptem Cup-Holder.
- Fig. 16: zeigt eine Perspektivansicht des Klapptischs gemäss Fig. 15 von hinten.
- Fig. 17: zeigt eine geschnittene Detailansicht der Verriegelungsmechanik für die Tischplatte in verriegelter Stellung.
- Fig. 18: zeigt eine geschnittene Detailansicht der Verriegelungsmechanik für die Tischplatte gemäss Fig. 17 in entriegelter Stellung.
- Fig. 19: zeigt eine Perspektivansicht des Klapptischs in der Gebrauchsstellung von hinten mit dem Verstellschlitten in der obersten Stellung sowie mit ausgeklapptem Steckelement.
- Fig. 20: zeigt eine Perspektivansicht des Klapptischs gemäss Fig. 19 mit eingeklapptem Steckelement.
- Fig. 21: zeigt eine geschnittene Detailansicht der Rastvorrichtung des Verstellschlittens in verriegelter Stellung.
- Fig. 22: zeigt eine geschnittene Detailansicht der Rastvorrichtung des Verstellschlittens gemäss Fig. 21 in entriegelter Stellung..
- Fig. 23: zeigt eine geschnittene Detailansicht des Verstellschlittens mit eingeklapptem Steckelement.
- Fig. 24: zeigt eine geschnittene Detailansicht des Verstellschlittens gemäss Fig. 23 mit dem Steckelement 90° ausgeklappt.
- Fig. 25: zeigt eine geschnittene Detailansicht des Verstellschlittens gemäss Fig. 23 und 24 mit dem durch einen Anschlag definierten maximalen Ausklappwinkel des Steckelements.
- Fig. 26: zeigt eine geschnittene Detailansicht eines Gelenkabschnitts des ersten Gelenks mit den beiden Rastbolzen und der Druckfeder in der Nichtgebrauchsstellung.
- Fig. 27: zeigt eine geschnittene Detailansicht des Gelenkabschnitts des ersten Gelenks mit den beiden Rastbolzen und der Druckfeder in der Gebrauchsstellung.
- Fig. 28: zeigt eine geschnittene Detailansicht eines Gelenkabschnitts des ersten Gelenks mit den beiden Rastbolzen und der Druckfeder in der Überlaststellung.
- Fig. 29: zeigt eine Explosionsdarstellung der beiden Rastbolzen mit der Druckfeder.
- Fig. 29a: zeigt eine geschnittene Detailansicht des zweiten Rastbolzens des ersten Gelenks, eingebaut in der Tischplatte.
- Fig. 29b: zeigt eine geschnittene Detailansicht des ersten Rastbolzens des ersten Gelenks, eingebaut im Trägerelement.
- Fig. 30: zeigt eine Perspektivansicht der beiden Rastbolzen mit der Druckfeder in der Nichtgebrauchsstellung gemäss Fig. 26.
- Fig. 31: zeigt eine Perspektivansicht der beiden Rastbolzen mit der Druckfeder in der Gebrauchsstellung gemäss Fig. 27.
- Fig. 32: zeigt eine Perspektivansicht der beiden Rastbolzen mit der Druckfeder in der Überlaststellung gemäss Fig. 28.
- Fig. 33: zeigt eine geschnittene Detailansicht des Stützelements mit der Lösetaste und der Überlastsicherung in der eingefahrenen Stellung.
- Fig. 34: zeigt eine geschnittene Ansicht des Stützelements in der ausgefahrenen Stellung.
- Fig. 35: zeigt eine geschnittene Ansicht des Stützelements gemäss Fig. 34 mit aktivierter Überlastsicherung.
- Fig. 36: zeigt eine geschnittene Detailansicht der Rastvorrichtung für den Cup-Holder mit dem Cup-Holder in der eingeklappten Nichtgebrauchsstellung.
- Fig. 37: zeigt eine geschnittene Detailansicht der Rastvorrichtung gemäss Fig. 36 mit dem Cup-Holder in der Gebrauchsstellung.
- Fig. 38: zeigt eine geschnittene Detailansicht der Rastvorrichtung gemäss Fig. 36 und 37 in der Überlast-Stellung.
- Fig. 39: zeigt eine geschnittene Detailansicht des Lagerbereichs des CupHolders.
- Fig. 40: zeigt einen Längsschnitt des Cup-Holders.
- Fig. 41: zeigt eine Ansicht des Klapptischs in der Gebrauchsstellung von vorne mit einer Haltevorrichtung am Trägerelement.
- Fig. 42: zeigt eine geschnittene Detailansicht des Trägerelements mit der Haltevorrichtung.

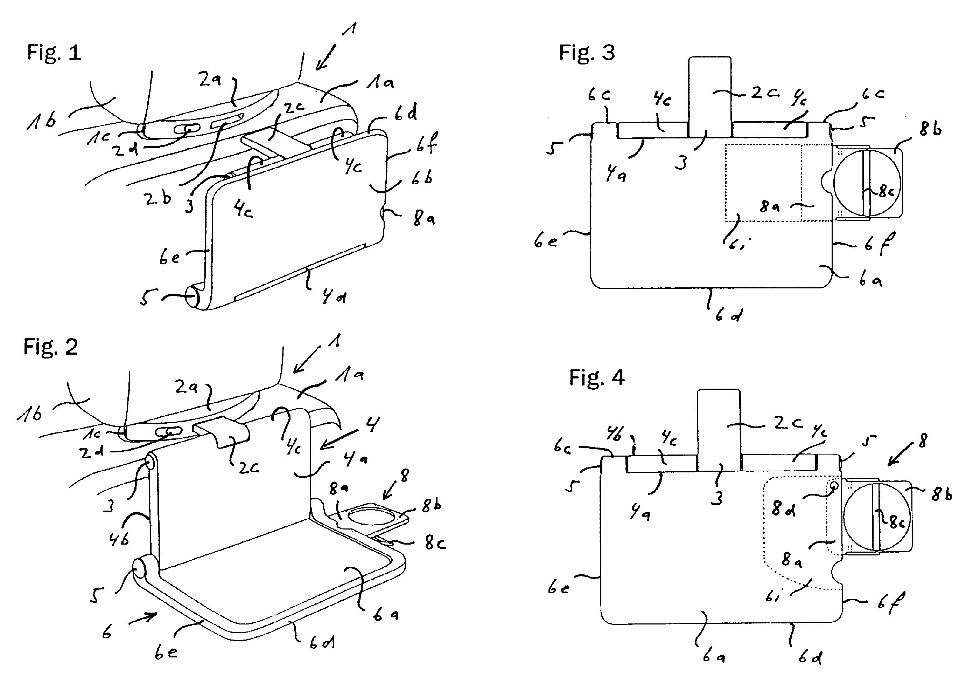

Fig. 1 bis 4 zeigen eine erste Variante des Klapptischs. An den Kopfstützenstangen1c des Fahrzeugsitzes 1 ist die Aufnahmebuchse 2b mit den Befestigungselementen 2a befestigt.

Das Steckelement 2c ist über das zweite Gelenk 3 drehbar mit dem oberen Ende 4c des Trägerelements 4 verbunden und zwischen einer Nichtgebrauchsstellung in der das Steckelement 2c parallel zur Rückseite 4b am Trägerelement 4 anliegt und einer Gebrauchsstellung in der das Steckelement 2c mit dem Trägerelement 4 einen Winkel von ca. 90° einschliesst, schwenkbar.

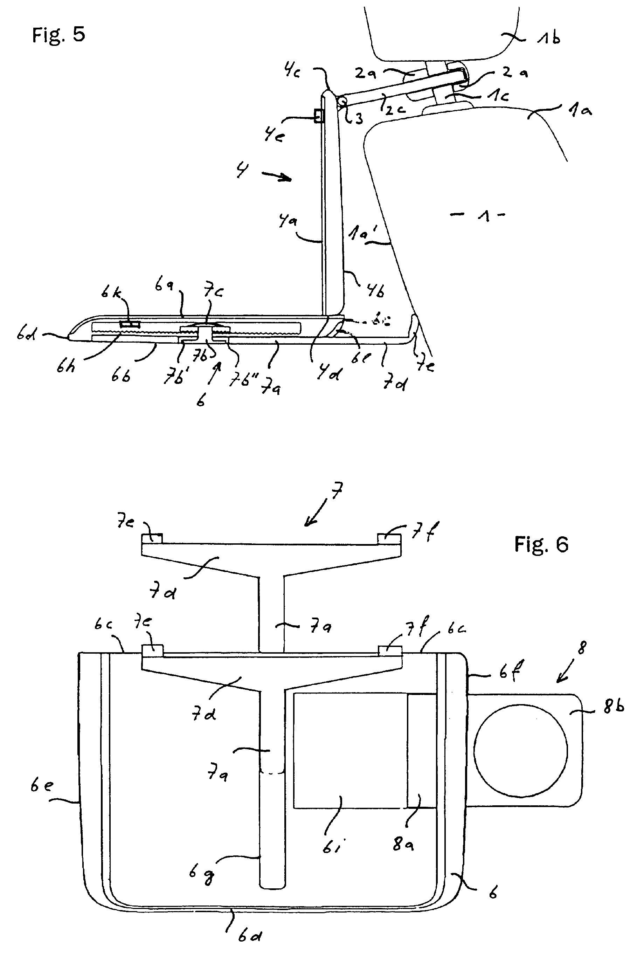

Das Trägerelement 4 erstreckt sich vom zweiten Gelenk 3 vertikal nach unten und schliesst mit der Rückseite 1a' der Rückenlehne 1a einen spitzen Winkel ein (Fig. 5).

Am unteren Ende 4d des Trägerelements 4 ist die Tischplatte 6 über das erste Gelenk 5 drehbar mit dem Trägerelement 4 verbunden und zwischen einer Nichtgebrauchsstellung, in der die Tischplatte 6 parallel zum Trägerelement 4 ausgerichtet ist (Fig. 1) und einer Gebrauchsstellung, in der die Tischplatte 6 mit dem Trägerelement 4 einen Winkel von ca. 90° einschliesst (Fig. 2), klappbar.

In der Tischplatte 6 ist ein Aufnahmeraum 6i vorgesehen, der an der seitlichen Stirnseite 6f der Tischplatte 6 offen ist. Im Aufnahmeraum 6i ist ein Cup-Holder 8 untergebracht, der mittels Führungsplatte 8a im Aufnahmeraum geführt und linear in die Gebrauchsstellung (Fig. 2 und 3) bewegt werden kann.

An der Führungsplatte 8a ist der Stützring 8b ausgebildet, der den Flüssigkeitsbehälter umgreift sowie ein nach unten klappbarer Abstützbügel angelenkt, der den Flüssigkeitsbehälter von unten abstützt.

Fig. 4 zeigt eine Variante mit einem Cup-Holder 8, der um ein vertikal im Aufnahmeraum 6i angeordnetes Drehgelenk 8d ausgeschwenkt wird.

Fig. 5 und 6 zeigen eine zweite Variante des Klapptischs mit einem Stützelement 7, das aus der Tischplatte 6 ausgefahren werden kann. Fig. 5 zeigt den Klapptisch befestigt an der Kopfstützenhalterung 1 c des Fahrzeugsitzes 1 mit der Tischplatte 6 in der Gebrauchsstellung. Das Trägerelement 4 schliesst mit der Rückseite 1a' der Rückenlehne 1a einen spitzen Winkel ein.

Auf der Unterseite 6b der Tischplatte 6 ist mittig die Führungsschiene 6g angeordnet, in der der Führungsschaft 7a des T-förmigen Stützelements 7 geführt ist (Fig. 6) Am vorderen Ende des Stützelements 7 ist die Abstützplatte 7d angebracht die parallel zur hinteren Stirnseite 6c der Tischplatte 6 verläuft und sich auf beiden Seiten des Führungsschafts 7a gleich weit in Richtung der beiden seitlichen Stirnseiten 6e, 6f der Tischplatte 6 erstreckt.

An den beiden freien Enden der Abstützplatte 7d sind Abstützelemente 7e, 7f angebracht, die sich bei ausgefahrenem Stützelement 7 an der Rückseite 1a' der Rückenlehne 1a abstützen.

Auf der hinteren Stirnseite 6c der Tischplatte 6 ist eine Ausnehmung 6l vorgesehen, die die Abstützplatte 7d in der eingeschobenen Stellung des Stützelements 7 aufnimmt.

An der in der Tischplatte 6 angeordneten Führungsschiene 6g ist eine Zahnstange 6h ausgebildet in die ein am hinteren Ende des Führungsschafts 7a angeordnetes Verriegelungselement 7c eingreift und das Stützelement 7 verriegelt.

Das Verriegelungselement 7c wird mit Federkraft in Eingriff mit der Zahnstange 6h gehalten und durch Druck auf die Lösetaste7b ausser Eingriff mit der Zahnstange 6h gebracht. Vor und hinter der Lösetaste 7b sind Griffleisten 7b', 7b" angeordnet, an denen das Stützelement 7 nach Lösen der Verriegelung 6h, 7b, 7c beidseitig verschoben werden kann.

Am oberen Ende des Trägerelements 4 ist mittig auf der Vorderseite 4a ein erstes Magnetelement 4e angeordnet, das mit einem an entsprechender Stelle an der Oberseite 6a der Tischplatte 6 positionierten zweiten Magnetelement 6k einen Verschluss zum fixieren der Tischplatte in ihrer Nichtgebrauchsstellung bildet.

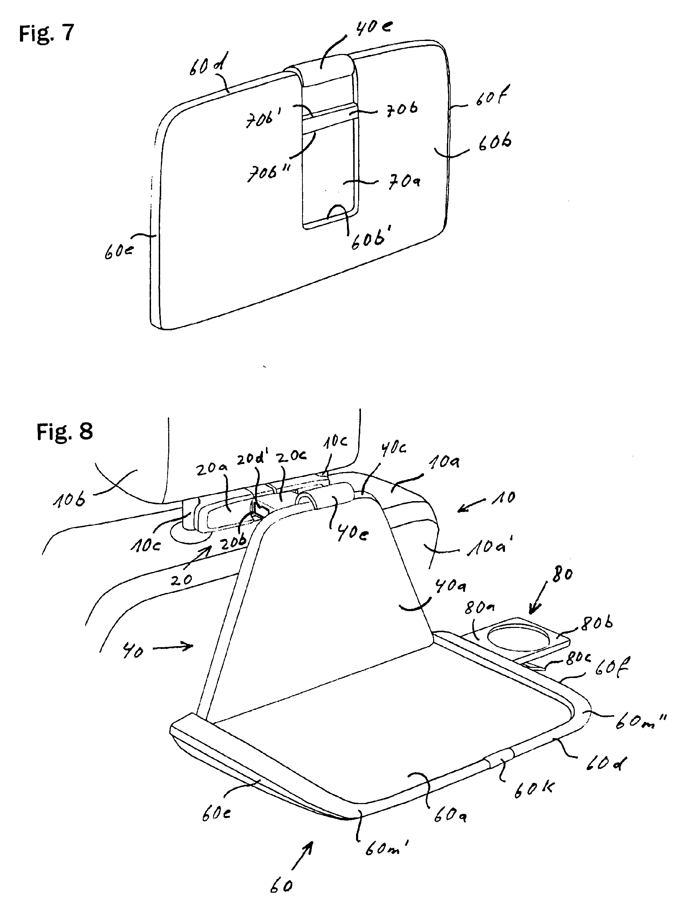

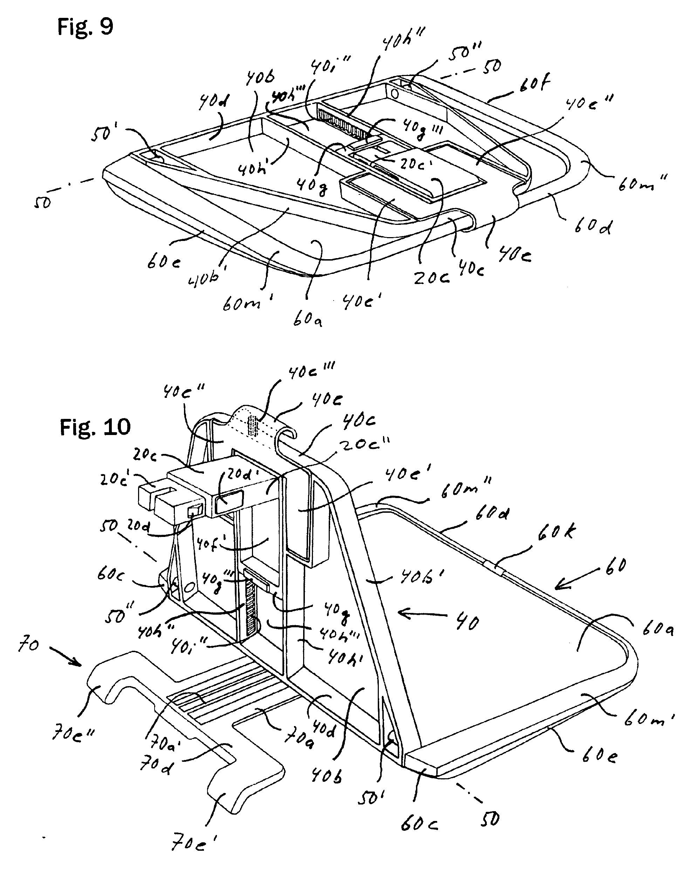

Fig. 7 bis 12 zeigen eine dritte Variante des Klapptischs. Die Befestigungseinrichtung 20 umfasst ein als Spannelement ausgebildetes Befestigungselement 20a, das zwischen die beiden Stangen der Kopfstützenhalterung 10c eingesetzt wird. Etwa mittig am Befestigungselement 20a ist die Aufnahmebuchse 20b angeordnet, in die der Steckerabschnitt 20c' des auf der Rückseite 40b des Trägerelements 40 ausklappbar angelenkte Steckelements 20c eingesteckt und mittels beidseitig am Steckerabschnitt 20c' angeordneten Verriegelungsvorrichtungen 20d verriegelt werden kann (Fig. 10). Zum Lösen der Verriegelungsvorrichtungen 20d müssen die auf den Seitenflächen 20 c" und 20c'" des Steckelements 20c angeordneten Entriegelungstasten 20d' gegeneinandergedrückt und der Steckerabschnitt 20c' aus der Aufnahmebuchse 20b herausgezogen werden.

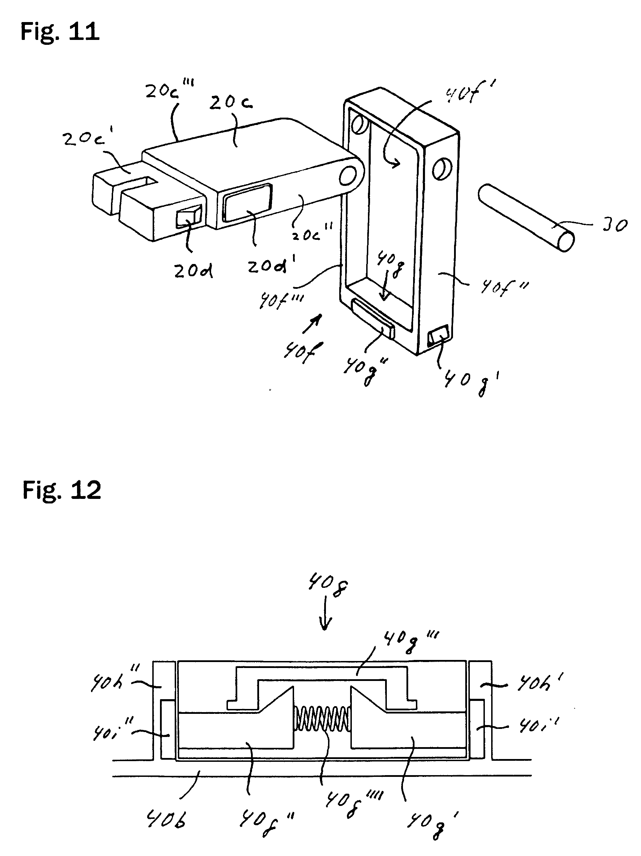

Das Steckelement 20c ist mit der Achse 30, die das zweite Gelenk bildet, mit dem rahmenförmigen Verstellschlitten 40f verbunden, der in einem Führungskanal 40h'" zwischen den Führungsrippen 40h', 40h" auf der Rückseite 40b des Trägerelements 40 linearverschiebbar geführt ist. Am Verstellschlitten 40f ist ein Aufnahmeraum 40f' vorgesehen, in den das Steckelement 20c zum platzsparenden Aufbewahren eingeklappt werden kann (Fig. 11).

Unterhalb des Aufnahmeraums 40f' ist ein U-förmiger Querträger 40g am Verstellschlitten 40f angeordnet, in dem eine Rastvorrichtung mit zwei Sperrriegeln 40g', 40g", die von einer Sperrfeder 40g"" auseinandergedrückt werden, untergebracht ist (Fig. 12).

An den Seitenwänden 40f", 40f"' des Verstellschlittens 40f sind Öffnungen vorgesehen, durch welche die Sperrriegel 40g', 40g" hindurch ragen und in die an den Führungsrippen 40h', 40h" angeordneten Zahnschienen 40i', 40i" eingreifen. Durch Druck auf die Verschlusstaste 40g"' werden die Sperrriegel 40g', 40g" gegeneinander bewegt und dadurch die Verrastung gelöst, so dass der Verstellschlitten 40f im Führungskanal 40h"'in die gewünschte Position verschoben und so die Tischhöhe eingestellt werden kann.

Am oberen Ende 40c des Trägerelements 40 ist mittig das Verschlusselement 40e angeordnet, mit dem die Tischplatte 60 in der Nichtgebrauchsstellung am Trägerelement 40 verriegelt werden kann. Das Verschlusselement 40e wird mit zwei gabelförmig angeordneten Führungsschenkeln 40e', 40e" an den Aussenseiten der Führungsrippen 40h', 40h" linear geführt und mit der Zugfeder 40e"' in die Verriegelungsposition vorgespannt.

In der Mitte der vorderen Stirnseite 60d der Tischplatte 60 ist eine Verschlussleiste 60k angeordnet, die beim Hochklappen der Tischplatte 60 vom Verschlusselement 40e überfahren wird und hinter der das Verschlusselement 40e einrastet, ohne dass dabei die Oberflächen der Randleisten 60m', 60m", welche die vordere Stirnseite 60d und die seitlichen Stirnseiten 60e, 60f der Tischplatte 60 umranden, verkratzt werden.

Das Stützelement 70 ist gabelförmig ausgebildet und mit einer am Führungsschaft 70a angeordneten Führung 70a' mittig in der Tischplatte 60 geführt. Auf der Unterseite des Führungsschafts 70a ist eine Lösetaste 70b vorgesehen (Fig. 7), mit der die Verriegelung des Stützelements 70 in der Tischplatte 60 (nach dem in Fig. 5 dargestellten Prinzip) gelöst werden kann.

Auf der Unterseite 60b der Tischplatte 60 ist mittig ein Ausschnitt 60b' vorgesehen, in dem die Lösetaste 70b, die sich über die Breite des Ausschnitts 60b' erstreckt, auf dem gesamten Verschiebeweg des Stützelements 70 zugänglich ist.

Die Stirnseiten 70b', 70b" der Lösetaste 70b sind so ausgebildet, dass die Lösetaste 70b auch als Griffleiste zum Verschieben des Stützelements 70 dient (Fig. 7).

Der Ausschnitt 60b' reicht bis zur vorderen Stirnseite 60d der Unterseite 60b der Tischplatte 60, so dass das Verschlusselements 40e bei verschlossener Tischplatte 60 nicht über die Unterseite 60b ragt.

An dem gegen die hintere Stirnseite 60c der Tischplatte 60 gerichteten Ende des Führungsschafts 70a ist quer zu diesem die Abstützplatte 70d angeordnet, die sich beidseitig bis zu den beiden Gelenkabschnitten 50', 50" des ersten Gelenks 50 erstreckt. An den beiden Enden der Abstützplatte 70d sind die nach hinten gerichteten Abstützelemente 70e', 70e" angeordnet.

Das Trägerelement 40 ist als einteilige Platte ausgebildet, die durch eine umlaufende Stirnwand 40b' verstärkt wird. Das erste Gelenk 50 umfasst zwei Gelenkabschnitte 50', 50", die am unteren Ende 40d hinter der Rückseite 40b und nahe der äusseren Seitenränder am Trägerelement 40 angeordnet sind.

An der vorderen Stirnseite 60d und den seitlichen Stirnseiten 60e, 60f der Tischplatte 60 sind Randleisten 60m', 60m" angeordnet, welche die Oberseite 60a der Tischplatte 60 überragen und das Trägerelement 40 auf beiden Seiten umgreifen.

Die Gelenkabschnitte 50', 50" sind oberhalb der Oberseite 60a mit den Randleisten 60m', 60m" verbunden, so dass das Trägerelement 40 bei hochgeklappter Tischplate 60 innerhalb der Randleisten 60m', 60m" liegt (Fig. 9).

Das Trägerelement 40 ist als gleichschenkliges Trapez ausgebildet, so dass der Kraftfluss bei minimalen Abmessungen des Trägerelements 40 möglichst stabil vom zweiten Gelenk 30 auf die beiden Gelenkabschnitte 50', 50" übertragen wird.

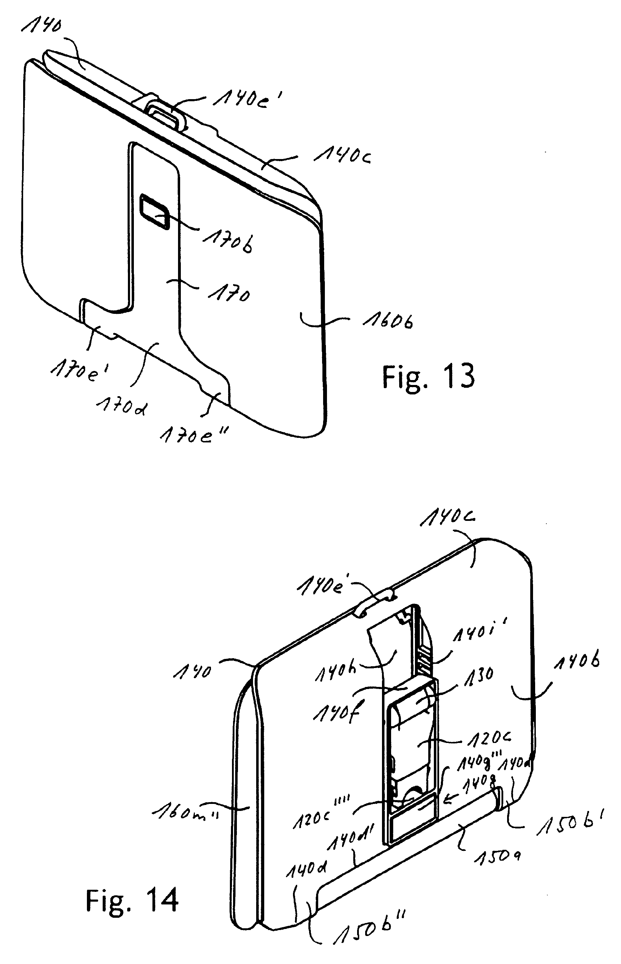

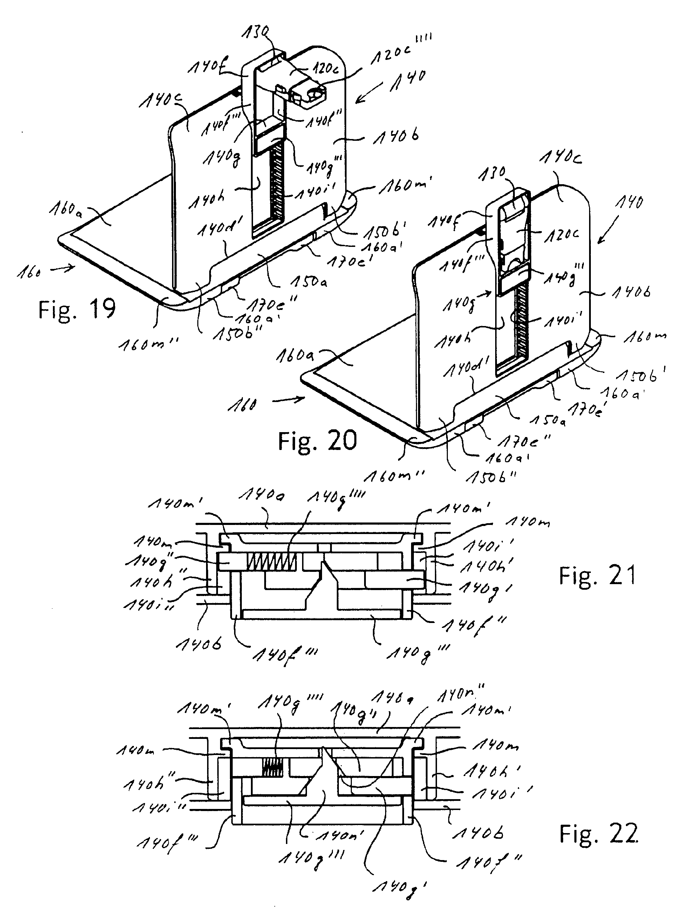

Fig. 13 bis 40 zeigen eine vierte Variante des Klapptischs. Das Trägerelement 140 ist am oberen Ende 140c gegen die Tischplatte 160 gewölbt und überdeckt die vordere Stirnseite 160d der Tischplatte 160 in der Nichtgebrauchsstellung.

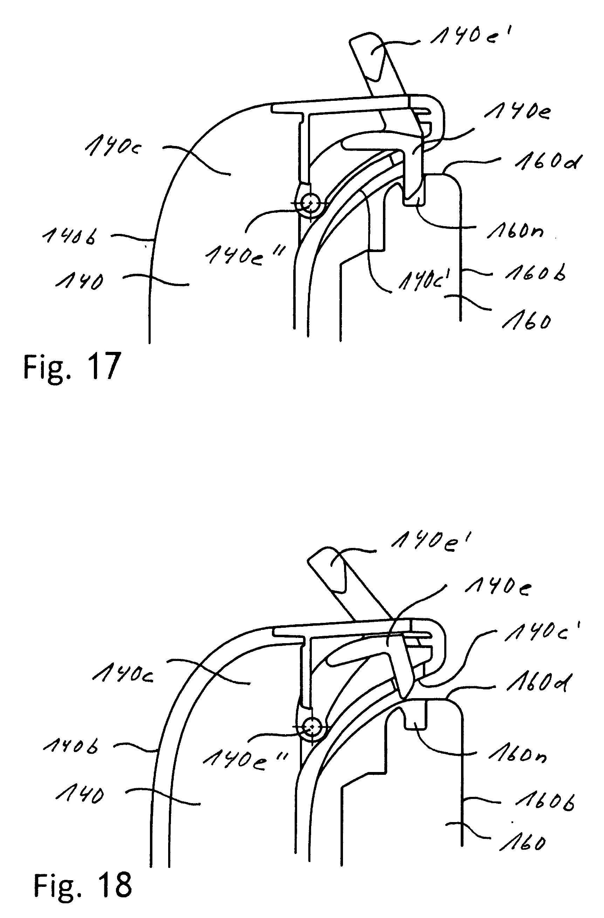

An der Stirnseite 160d der Tischplatte 160 ist eine Ausnehmung 160n angeordnet, in die ein auf der gewölbten Innenseite 140c' des Trägerelements 140 angeordnetes Verschlusselement 140e eingreift und die Tischplatte in der Nichtgebrauchsstellung festhält (Fig. 17).

Am Trägerelement 140 ist ein Drehlager 140e" angeordnet, welches das Drehgelenk für das Verschlusselement 140e bildet. Das Verschlusselement 10e wird mit einer Schenkelfeder (nicht dargestellt) in Eingriff mit der Ausnehmung 160n gehalten und kann zum Lösen der Tischplatte 160 mit den bügelförmigen Betätigungsorgan 140e' aus der Ausnehmung 160n heraus bewegt werden (Fig. 18).

Die Breite der Tischplatte 160 ist grösser als die Breite des Trägerelements 140, so dass die gegenüber der Oberseite 160a der Tischplatte 160 erhöhten seitlichen Randleisten 160m', 160m" das Trägerelement 140 seitlich überragen und in der Nichtgebrauchsstellung zwischen sich aufnehmen.

Am unteren Ende 140d des Trägerelements 140 ist ein mittig angeordneter Ausschnitt 140d' vorgesehen, in den ein am hinteren Ende 160a' der Tischplatte 160 senkrecht zur Oberseite 160a der Tischplatte 160 angeordneter mittlerer Gelenkfortsatz 150a hineinragt.

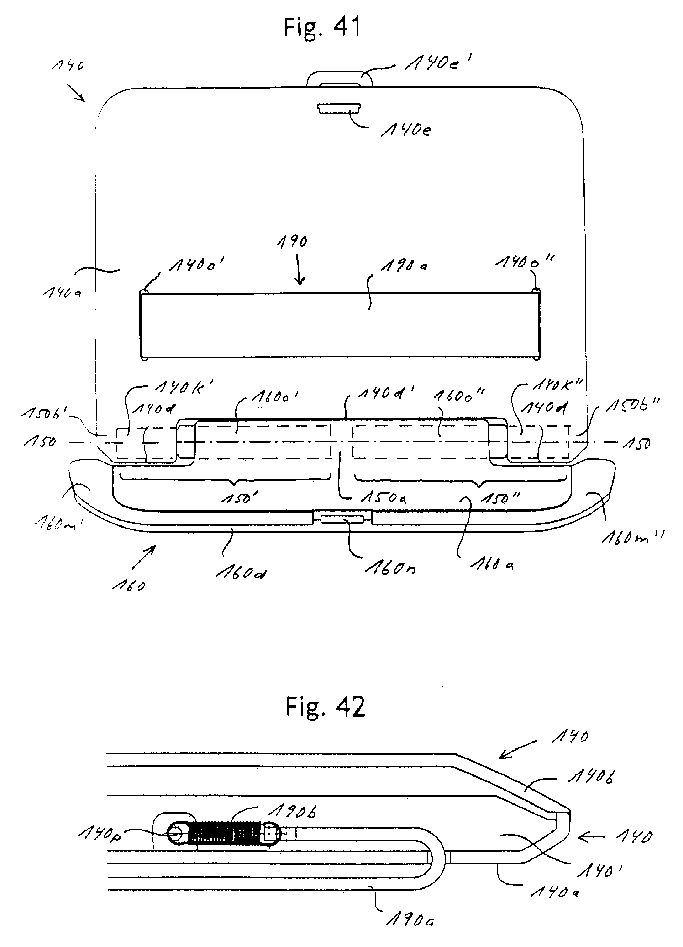

Im mittleren Gelenkfortsatz 150a der Tischplatte 160 sowie in den beiden seitlichen Gelenkfortsätzen 150b', 150b" des Trägerelements 140 sind hohlzylinderförmige innere und äussere Aufnahmeräume 160o', 160o", 140k', 140k", für die beiden Gelenkabschnitte 150', 150" des ersten Gelenks 150 ausgebildet (Fig. 41).

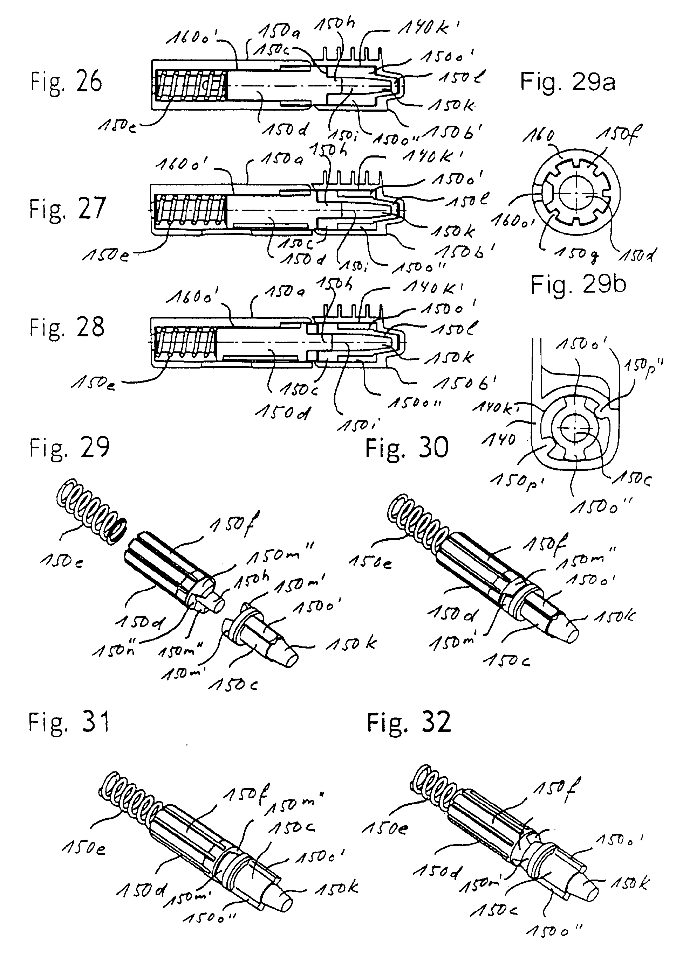

Die beiden Gelenkabschnitte 150' und 150"sind spiegelsymmetrisch aufgebaut, so dass identische Bauteile verwendet werden können und umfassen einen ersten Rastbolzen 150c, der im äusseren Aufnahmeraum 140k', 140k" aufgenommen ist und einen zweiten Rastbolzen 150d, der mit einer Druckfeder 150e gegen den ersten Rastbolzen 150c gedrückt wird und zusammen mit der Druckfeder 150e im inneren Aufnahmeraum 160o', 160o" aufgenommen ist (Fig. 26 bis 32).

Der erste Rastbolzen 150c hat eine zylindrische Mantelfläch mit zwei diametral angeordneten axial ausgerichteten Anschlagrippen 150o', 150o". Auf der inneren Mantelfläche des äusseren Aufnahmeraums 140k', 140k" sind zwei diametral angeordnete axial ausgerichtete Gegenanschläge 150p', 150p" angeordnet, die den Drehwinkel des ersten Rastbolzens 150c auf 90° begrenzen (Fig. 29b).

Die gegen aussen gerichtete Stirnseite des ersten Rastbolzens 150c ist als Konus 150k ausgebildet, der in einer an der inneren Stirnseite des äusseren Aufnahmeraums 140k', 140k" konisch ausgebildeten Lagerschale 150l gelagert ist, die einen Anschlag für die axiale Bewegung des ersten Rastbolzens 150c nach aussen und eine Reibungsbremse 150k, 150l zur Hemmung der Drehbewegung des Rastbolzens 150c bildet.

Der zweite Rastbolzen 150d hat ebenfalls eine zylindrische Mantelfläche mit rundum symmetrisch angeordneten axial ausgerichteten Längsrippen 150f, die mit entsprechenden an der inneren Mantelfläche des inneren Aufnahmeraums 160o', 160o" angeordneten axial ausgerichteten Gegenrippen 150g kämmen, so dass der zweite Rastbolzen 150d gegen Verdrehen gesichert ist, sich jedoch im inneren Aufnahmeraum 160o', 160o" axial verschieben kann (Fig. 29a).

An den gegeneinander gerichteten Stirnseiten sind der erste Rastbolzen 150c und der zweite Rastbolzen 150d mit je zwei diametral angeordneten Klauen 150m', 150m"versehen, wobei die Kupplungsklauen 150m', 150m" des einen Rastbolzens 150c, 150d in die Klauentaschen 150n', 150n" des anderen Rastbolzens 150c, 150d eingreifen und eine Klauenkupplung 150m', 150m", 150n', 150n" bilden.

Im Zentrum der gegen den ersten Rastbolzen 150c gerichteten Stirnseite des zweiten Rastbolzens 150d ist ein Führungszapfen 150h angeordnet, der in einer im Zentrum des zweiten Rastbolzens 150d angeordneten Bohrung 150i aufgenommen ist und die beiden Rastbolzen 150c, 150d zueinander ausrichtet.

Die Flanken der Klauen 150m', 150m" sind konisch ausgebildet, so dass beim Überschreiten einer vorbestimmten Grenzbelastung der Tischplatte 160 und entsprechendem Anstieg des Drehmoments auf die Klauenkupplung 150m', 150m", 150n', 150n" der zweite Rastbolzen 150d gegen die Druckfeder 150e gedrückt und die Klauenkupplung 150m', 150m", 150n', 150n" gelöst wird, wobei die Zentrierung der beiden Rastbolzen 150c, 150d durch den Führungszapfen 150h in der Bohrung 150i erhalten bleibt.

Im Normalgebrauch sind die beiden Rastbolzen 150c, 150d über die Klauenkupplung 150m', 150m", 150n', 150n" fest miteinander verbunden und drehen sich gemeinsam mit der Tischplatte 160 mit einem Drehwinkel von 90° zwischen der Nichtgebrauchsstellung und der Gebrauchsstellung, die durch die Anschlagsrippen 150o', 150o" am ersten Rastbolzen 150c und den Gegenanschlägen 150p', 150p" im äusseren Aufnahmeraum 140k', 140k" bestimmt sind. Die Drehbewegungen werden dabei durch die Reibungsbremse 150k, 150l gehemmt (Fig. 26, 30 und 27, 31).

Wird die Grenzbelastung der Tischplatte 160 in der Gebrauchsstellung überschritten (bspw. indem sich jemand auf der Tischplatte abstützt oder bei einem Unfall), so löst sich die Klauenkupplung 150c, 150d, 150n', 150n" und der zweite Rastbolzen 150d kann sich frei drehen, so dass die Tischplatte 160 nach unten wegklappen kann (Fig. 28, 32).

In der Mitte der geschlossenen Rückseite 140b des Trägerelements 140 ist ein offener Führungskanal 140h angeordnet, der sich vom Ausschnitt 140d' bis zum oberen Ende 140c des Trägerelements 140 erstreckt und oben offen ist. An den seitlichen Führungsrippen 140h', 140h" des Führungskanals 140h sind Zahnschienen 140i', 140i" angeordnet.

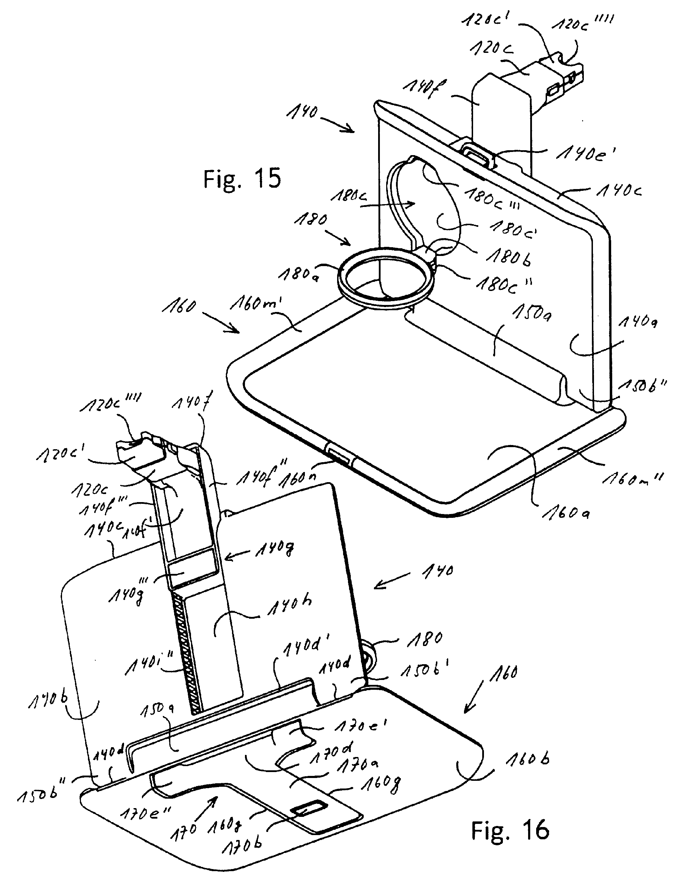

Im Führungskanal 140h ist ein Verstelischlitte 140f mittels unterhalb der Zahnschienen 140i', 140i" angeordneten Schlittenführungen 140m, 140m' geführt, der von einer unteren Endstellung, in der er vollständig im Führungskanal 140h aufgenommen ist (Fig. 14) in eine obere Endstellung, in der er das obere Ende 140c des Trägerelements 140 überragt (Fig. 15 und 16) verschoben werden kann.

Der Verstellschlitten 140f ist wannenförmig ausgebildet und auf der der dem Trägerelement 140 abgewandten Breitseite offen.

Am unteren Ende des Verstellschlittens 140f ist ein Querträger 140g angeordnet, der eine Aufnahmegehäuse bildet für zwei Sperrriegel 140g', 140g", eine Sperrfeder 140g"" sowie eine Verschlusstaste 140g"', welche die offene Breitseite des Querträgers 140g abdeckt.

Die beiden Sperrriegel 140g', 140g" sind übereinander angeordnet und werden von Sperrfedern 140g"" durch die an den Seitenwänden 140f", 140f'" des Verstellschlittens 140f vorgesehenen Durchbrüche gegen die Zahnschienen 140i', 140i" an den seitlichen Führungsrippen 140h', 140h" des Führungskanals 140h gedrückt, wodurch der Verstellschlitten 140f im Führungskanal 140h blockiert wird. Durch Druck auf die Verschlusstaste 140g'" werden die Sperrriegel 140g', 140g" über Umlenkelemente 140n', 140n" gegeneinander bewegt und von den Zahnschienen 140i', 140i" entkoppelt, so, dass der Verstellschlitten 140f im Führungskanal 140h verschoben werden kann.

Am oberen Ende des Verstellschlittens 140 f ist das Steckelement 120c über das zweite Gelenk 130 mit dem Verstellschlitten 140f verbunden und kann bei Nichtgebrauch in den Aufnahmeraum 140 f' eingeklappt werden (Fig. 14, 20, 23).

Zum bequemen Ausklappen ist im Steckerabschnitt 120c' des Steckelements 120c eine Griffmulde 120c"" angeordnet.

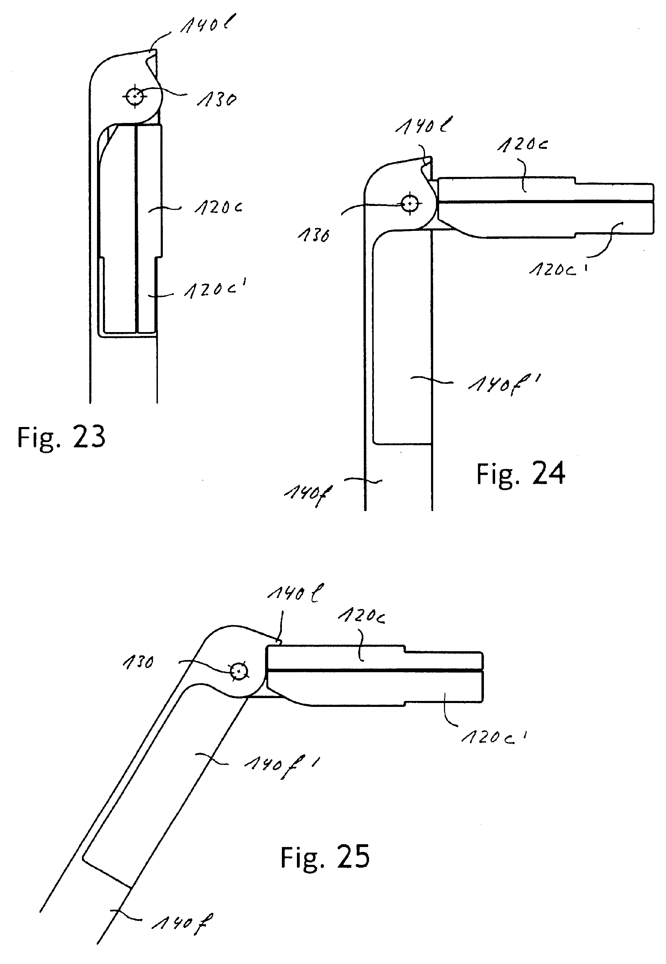

Das zweite Gelenk 130 und das Steckelement 120c werden vom Verstellschlitten 140f abgedeckt. Ein Anschlag 140l begrenzt den Ausklappwinkel des Steckelements 120c, so dass das Trägerelement 140 nur in einem vorgegebenen Winkel von der Rückenlehne 110a wegschwenken kann, ohne dabei die Passagiere auf dem Rücksitz zu gefährden (Fig. 23 -25).

Durch das in Richtung zur Rückenlehne 110a versetzt zum Trägerelement 140 angeordnete zweite Gelenk 130 ergibt sich schwerpunktbedingt eine Schräglage des Trägerelements 140, so dass sich in der Gebrauchsstellung das ausschiebbare Stützelement 170 auch ohne Belastung der Tischplatte 160 an der Rückseite 110a' der Rückenlehne 110a abstützt und sich der Klapptisch in der Nichtgebrauchsstellung an die Neigung der Rückseite 110a' der Rückenlehne 110a anlegt. Das zweite Gelenk 130 ist mit einer Reibungsbremse versehen, so dass das Trägerelement 140 auch in leichten Schräglagen stabil gehalten wird.

In der Gebrauchsstellung wird die horizontale Lage der Tischplatte 160, bzw. die vertikale Lage des Trägerelements 140 mit dem Stützelement 170 eingestellt. Je nach Kontur und Schrägstellung der Rückenlehne 110a wird das Stützelement 170 soweit aus der Tischplatte 160 hinaus geschoben, bis sich die Abstützelemente 170e', 170e" an der Rückseite 110a' der Rückenlehne 110a abstützen und die gewünschte Lage der Tischplatte 160 eingestellt ist.

Das Stützelement 170 ist am hinteren Ende des Führungsschafts 170a mit einer Schwenkachse 170f am hinteren Ende eines Führungsschlittens 170g angelenkt, der in der Führungsschiene 160g auf der Unterseite 160b der Tischplatte 160 linear verschiebbar geführt ist. Am vorderen Ende des Führungsschlittens 170g ist eine Federklammer 170h angeordnet, mit welcher der Führungsschaft 170a mit dem Haken 170a' am Führungsschlitten 170g festgehalten wird.

Am Führungsschlitten 170g ist eine federbeaufschlagte Lösetaste 170b in Form einer Wippe angeordnet mit einem Zahnsegment 170 i, das in die in der Tischplatte 160 parallel zur Führungsschiene 160g angeordnete Zahnstange 160h eingreift und das Stützelement 170 in der gewünschten Position festhält. Die Zahnstange 160h ist mit einer Sägezahn-Verzahnung versehen, so dass das Stützelement 170 ohne Betätigung der Lösetaste 170b aus der Tischplatte 160 hinausgeschoben werden kann, während die Lösetaste 170b zum Einfahren des Stützelements 170 in die Tischplatte 160 gedrückt werden muss.

Wird die Überlastsicherung der Tischplatte 160 (wie weiter oben beschrieben) durch zu hohe Belastung aktiviert, so dass die Tischplatte 160 aus der Gebrauchsstellung nach unten klappt, löst sich der Führungsschaft 170a aus der Federklammer 170h, so dass einerseits die Überlastfunktion der Tischplatte 160 nicht beeinträchtigt wird und die Tischplatte 160 frei nach unten wegklappen kann und andererseits das Stützelement 170 oder die Rückseite 110a' der Rückenlehne 110a nicht beschädigt werden.

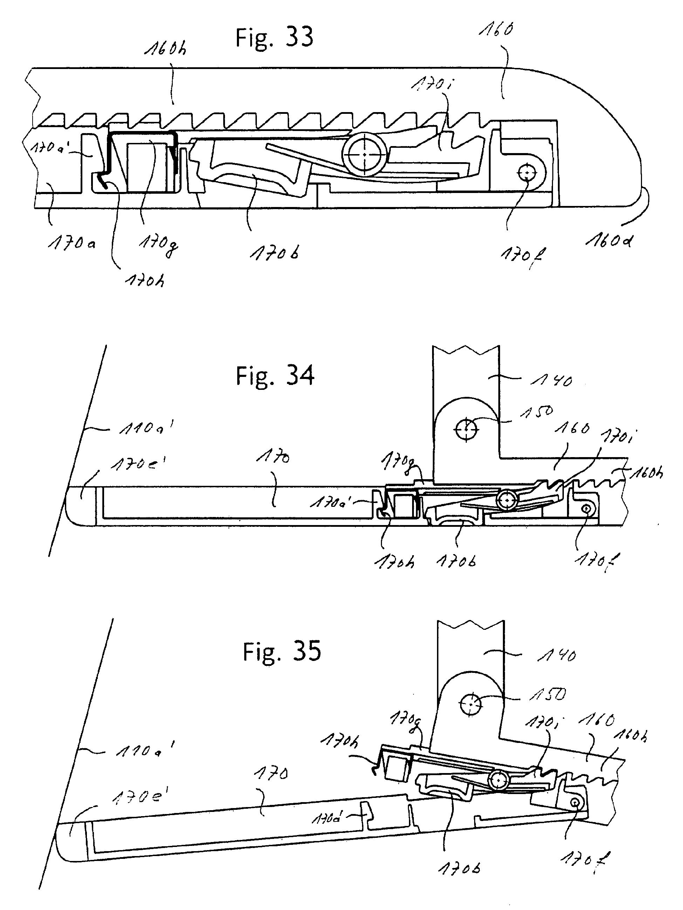

Nach einem Auslösen der Überlastsicherung kann der Führungsschaft 170a um die Schwenkachse 170f hochgeklappt und wieder in die Federklammer 170h eingeklinkt werden (Fig. 35).

Auf der Vorderseite 140a des Trägerelements 140 ist ein ausklappbarer Cup-Holder 180 angebracht, der einen ringförmigen Träger 180a mit einem Gelenkfortsatz 180b und zwei in den Träger 180a eingesetzte Zierringe 180 g', 180g" umfasst (Fig. 15).

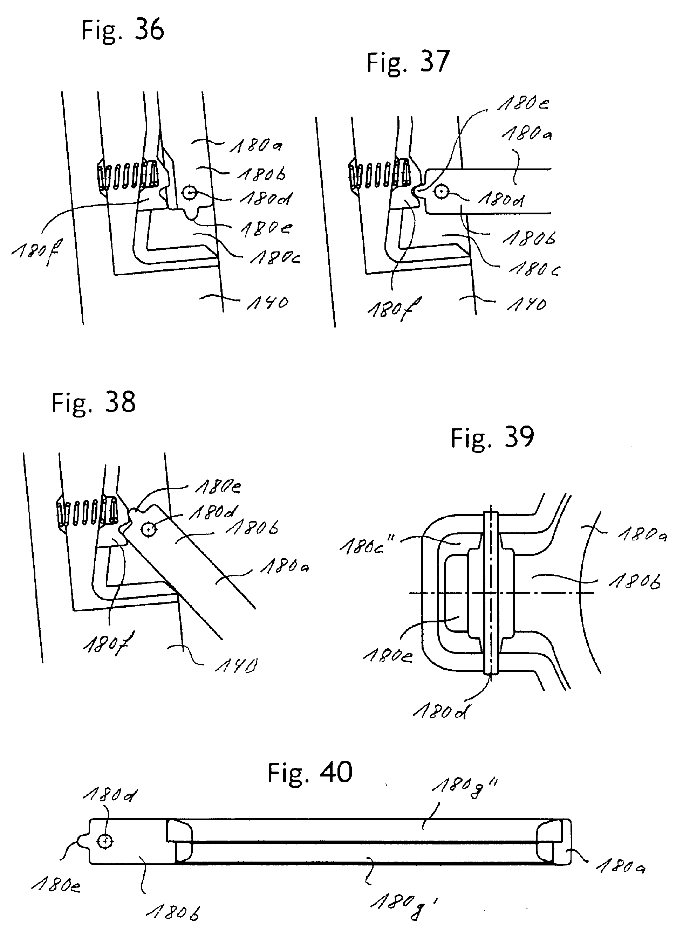

Am Trägerelement 140 ist eine runde schalenförmige Ausnehmung 180c vorgesehen, in die der Cup-Holder 180 bei Nichtgebrauch eingeklappt wird. Auf der unteren Seite der Ausnehmung 180c ist eine Ausbuchtung 180c" angeordnet, in welcher der Gelenkfortsatz 180b mit einer parallel zur Vorderseite 140a und horizontal ausgerichteten Achse 180d im Trägerelement 140 gelagert ist (Fig. 39).

Der Gelenkfortsatz 180b ist über die Achse 180d hinaus mit einer Rastzunge 180e verlängert, die in ein an der Bodenwand 180 c' der Ausnehmung 180c angeordnetes federbeaufschlagtes Rastelement 180f eingreift, das den Träger 180a in die eingeklappte Nichtgebrauchsstellung und in die 90° ausgeklappte Gebrauchsstellung vorspannt und in diesen Stellungen fixiert (Fig. 36, 37).

Bei Überlast lässt sich der Träger 180a über die 90°- Gebrauchsstellung hinaus gegen die ausgeklappte Tischplatte 160 bewegen, wobei dazu eine durch entsprechende Geometrie am Rastelement 180f erzeugte höhere Rastkraft überwunden werden muss (Fig. 38)

Diametral zur Ausbuchtung 180c" ist an der Ausnehmung 180c eine Fingermulde 180c'" zum Ausklappen des Trägers 180a angeordnet.

Auf beiden Seiten des Trägers 180a sind Zierringe 180g', 180g" eingesetzt, die vorzugsweise in einer zum Trägerelement 140 und zum Träger 180a kontrastierenden Farbe ausgeführt sind (Fig. 40).

Fig. 41 und 42 zeigen eine Haltevorrichtung 190 in Form eines an der Vorderseite 140a des Trägerelements 140 angeordneten elastischen Spanngurts 190a, der sich parallel zur ausgeklappten Tischplatte 160 über einen wesentlichen Teil der Breite des Trägerelements 140 erstreckt und dessen Enden durch zwei Schlitzöffnungen 140o', 140o" in den Innenraum 140' des Trägerelements 140 geführt und mit Spannfedern 190p , die an Federaufhängungen 140p im Trägerelement 140 befestigt sind, gespannt werden.

## Patentansprüche

1. Klapptisch zur Anbringung auf der Rückseite eines Fahrzeugsitzteils, wie eine Rückenlehne (1 a, 10a, 110a), Kopfstütze (1 b, 10b, 110b) oder Kopfstützenhalterung (1 c, 10b, 110c) eines Fahrzeugsitzes (1 , 10, 110), umfassend
eine Befestigungseinrichtung (2a, 2b, 2c, 2d, 20a, 20b, 20c, 20d, 120a, 120b, 120c, 120d) zum Befestigen des Klapptischs an dem Fahrzeugsitzteil (1 a, 1 b, 1 c, 10a, 10b, 10c, 110a, 110b, 110c),
ein mit der Befestigungseinrichtung (2a, 2b, 2c, 2d, 20a, 20b, 20c, 20d 120a, 120b, 120c, 120d) verbundenes Trägerelement (4, 40, 140), das sich von der Befestigungseinrichtung (2a, 2b, 2c, 2d, 20a, 20b, 20c, 20d, 120a, 120b, 120c, 120d) nach unten erstreckt,
eine am unteren Ende (4d, 40d, 140d) des Trägerelements (4, 40, 140) über ein erstes Gelenk (5, 50, 50', 50", 150', 150", 150a, 150b', 150b", 150c, 150d) drehbar mit dem Trägerelement (4, 40, 140) verbundene Tischplatte (6, 60, 160), die zwischen einer Nichtgebrauchsstellung, in der die Tischplatte (6, 60, 160) in etwa parallel zum Trägerelement (4, 40, 140) ausgerichtet ist, und einer Gebrauchsstellung, in der die Tischplatte (6, 60, 160) mit dem Trägerelement (4, 40, 140) einen Winkel von etwa 80° bis 120° einschliesst, hin- und zurück schwenkbar ist,
wobei das Trägerelement (4, 40, 140) über ein zweites Gelenk (3, 30, 130), dessen Drehachse parallel zur Drehachse des ersten Gelenks (5, 50, 50', 50", 150', 150", 150a, 150b', 150b", 150c, 150d) verläuft, mit der Befestigungseinrichtung (2a, 2b, 2c, 2d, 20a, 20b, 20c, 20d, 120a, 120b, 120c, 120d) verbunden ist, und
wobei an der Tischplatte (6, 60, 160) symmetrisch bezüglich der Mitte der hinteren Stirnseite (6c, 60c, 160c) der Tischplatte Abstützelemente (7e, 7f, 70e', 70e", 170e', 170e") angeordnet sind, die in der Gebrauchsstellung der Tischplatte (6, 60, 160) mit einem gemeinsamen Betätigungsorgan (7a, 7d, 7b', 7b", 70a, 70b', 70b", 70d, 170a, 170e', 170e", 170d) in Richtung gegen das Fahrzeugsitzteil (1 a, 1 b, 1 c, 10a, 10b, 10c, 110a, 110b, 110c) beweglich und mit einer manuell lösbaren Rastvorrichtung (6h, 7b, 7c, 70b, 160h, 170i, 170b) in unterschiedlichen Stellungen feststellbar sind, so dass die Tischplatte (6, 60, 160) in eine horizontale Lage ausgerichtet werden kann und am Fahrzeugsitzteil (1 a, 1 b, 1 c, 10a, 10b, 10c, 110a, 110b, 110c) gegen Belastungen abgestützt ist.

2. Klapptisch nach Anspruch 1, wobei die Abstützelemente (7e, 7f, 70e', 70e", 170e', 170e") und das Betätigungsorgan (7a, 7d, 7b', 7b", 70a, 70b', 70b", 70d, 170a, 170e', 170e", 170d) gemeinsam ein Stützelement (7, 70, 170) bilden.

3. Klapptisch nach Anspruch 2, wobei das Stützelement (7, 70, 170) mit einer Linearführung (6g, 7a, 70a, 70a', 160g, 170a, 170g) an der Tischplatte (6, 60, 160) geführt und in seiner Nichtgebrauchsstellung im Wesentlichen in Ausnehmungen (6g, 61, 60b') der Tischplatte (6, 60, 160) aufgenommen ist.

4. Klapptisch nach Anspruch 3, wobei die Linearführung (6g, 7a, 70a', 160g, 170a, 170g) eine in etwa mittig zwischen den seitlichen Stirnseiten (6e, 6f, 60e, 60f,160e, 160f) und parallel zu diesen an der Tischplatte (6, 60, 160) angeordnete Führungsschiene (6g, 60g) umfasst, in der ein am Stützelement (7, 70, 170) angeordneter Führungsschaft (7a, 70a, 170a,) geführt ist.

5. Klapptisch nach Anspruch 3 oder 4, wobei das Stützelement (7, 70. 170) an dem gegen das Fahrzeugsitzteil (1 a, 1 b, 1 c, 10a, 10b, 10c, 110a, 110b, 110c) gerichteten Ende des Führungsschafts (7a, 70a, 170a) eine in etwa parallel zur hinteren Stirnseite (6c, 60c, 160c) der Tischplatte (6, 60, 160) ausgerichtete Abstützplatte (7d, 70d, 170d) aufweist, die sich auf beiden Seiten des Führungsschafts (7a, 70a, 170a) etwa gleich weit in Richtung der beiden seitlichen Stirnseiten (6e, 6f, 60e, 60f, 160e, 160f) erstreckt.

6. Klapptisch nach Anspruch 5, wobei die Abstützelemente (7e, 7f, 70e', 70e", 170e', 170e"), die sich am Fahrzeugsitzteil (1 a, 1 b, 1 c, 10a, 10b, 10c, 110a, 110b, 110c) abstützen, an den beiden freien Enden der Abstützplatte (7d, 70d, 170d) angeordnet sind.

7. Klapptisch nach einem der Ansprüche 2 bis 6, wobei am Stützelement (7, 70, 170) Griffleisten (7b', 7b", 70b', 70b") angeordnet sind, mit denen das Stützelement (7, 70, 170) in beide Richtungen verschoben werden kann.

8. Klapptisch nach einem der Ansprüche 2 bis 7, wobei auf der Unterseite (6b, 60b, 160b) der Tischplatte (6, 60, 160) ein Ausschnitt (6g, 60b') vorgesehen ist, in dem die Lösetaste (7b, 70b, 170b) und die Griffleisten (7b', 7b", 70b', 70b") auf dem gesamten Verschiebeweg des Stützelements (7, 70, 170) zugänglich sind.

9. Klapptisch nach einem der Ansprüche 1 bis 8, wobei die Rastvorrichtung (6h, 7b, 7c, 70b, 160h, 170i, 170b) eine an der Tischplatte (6, 60, 160) angeordnete Zahnstange (6h, 160h) umfasst, in die ein am Stützelement (7, 70, 170) angeordnetes Verriegelungselement (7c, 170i) eingreift, das mit einer Lösetaste (7b, 70b, 170b) ausser Eingriff mit der Zahnstange (6h, 160h) gebracht werden kann.

10. Klapptisch nach Anspruch 9, wobei die Lösetaste (7b, 70b, 170b) nahe dem gegen die vordere Stirnseite (6d, 60d, 160d) der Tischplatte (6, 60, 160) gerichteten Ende des Führungsschafts (7a, 70a, 170a) angeordnet ist.

11. Klapptisch nach einem der Ansprüche 1 bis 10, wobei das Trägerelement (4, 40, 140) über eine Kupplung (2b, 2c, 20b, 20c, 20c', 120b, 120c, 120c') mit manuell lösbarer Verriegelungsvorrichtung (2d, 20d, 20d', 120d, 120d') mit der Befestigungseinrichtung (2a, 2b, 2c, 2d, 20a, 20b, 20c, 20c', 20d, 20d', 120a, 120b, 120c, 120d) verbunden ist.

12. Klapptisch nach Anspruch 11 , wobei die Kupplung (2b, 2c, 20b, 20c, 20c', 120b, 120c, 120c') eine an einem Befestigungselement (2a, 20a, 120a) angeordnete Aufnahmebuchse (2b, 20b, 120b) sowie ein mit dem Trägerelements (4, 40, 140) verbundenes Steckelement (2c, 20c, 20c', 120c, 120c') umfasst, das in die Aufnahmebuchse (2b, 20b, 120b) eingesteckt und verriegelt werden kann.

13. Klapptisch nach Anspruch 12, wobei das Befestigungselement (2a, 20a, 120a) als Spannelement ausgebildet ist, das zwischen den beiden Stangen der Kopfstützenhalterung (1 c, 10c, 110c) eingespannt werden kann, und wobei die Aufnahmebuchse (2b, 20b, 120b) in etwa mittig am Spannelement angeordnet ist.

## Claims

1. Folding table for attachment to the rear side of a vehicle seat part, such as a backrest (1a, 10a, 110a), head support (1b, 10b, 110b) or head support mounting (1c, 10b, 110c) of a vehicle seat (1, 10, 110), comprising
a fastening device (2a, 2b, 2c, 2d, 20a, 20b, 20c, 20d, 120a, 120b, 120c, 120d) for fastening the folding table to the vehicle seat part (1a, 1b, 1c, 10a, 10b, 10c, 110a, 110b, 110c),
a carrier element (4, 40, 140) which is connected to the fastening device (2a, 2b, 2c, 2d, 20a, 20b, 20c, 20d, 120a, 120b, 120c, 120d) and extends downward from the fastening device (2a, 2b, 2c, 2d, 20a, 20b, 20c, 20d, 120a, 120b, 120c, 120d),
a tabletop (6, 60, 160) rotatably connected to the carrier element (4, 40, 140) via a first joint (5, 50, 50', 50", 150', 150", 150a, 150b', 150b", 150c, 150d) at the lower end (4d, 40d, 140d) of the carrier element (4, 40, 140), which can be pivoted between a non-working position, in which the tabletop (6, 60, 160) is aligned approximately parallel with the carrier element (4, 40, 140), and a working position, in which the tabletop (6, 60, 160) is at an angle of approx. 80° to 120° to the carrier element (4, 40, 140),
wherein the carrier element (4, 40, 140) is connected to the fastening device (2a, 2b, 2c, 2d, 20a, 20b, 20c, 20d, 120a, 120b, 120c, 120d) via a second joint (3, 30, 130), whose axis of rotation extends parallel with the axis of rotation of the first joint (5, 50, 50', 50", 150', 150", 150a, 150b', 150b", 150c, 150d), and
wherein propping elements (7e, 7f, 70e', 70e", 170e', 170e") are arranged on the tabletop (6, 60, 160) symmetrically with respect to the center of the rear end face of the tabletop (6, 60, 160) which, when the tabletop (6, 60, 160) is in the working position, can be moved in the direction toward the vehicle seat part (1, 10, 110) by a common actuating member (7a, 7d, 7b', 7b", 70a, 70b', 70b", 70d, 170a, 170e', 170e", 170d) and can be fixed in different positions by a manually releasable latching device (6h, 7b, 7c, 70b, 160h, 170i, 170b), so that the tabletop (6, 60, 160) can be aligned in a horizontal position and is supported on the vehicle seat part (1a, 1b, 1c, 10a, 10b, 10c, 110a, 110b, 110c) against loads.

2. Folding table according to claim 1, wherein the propping elements (7e, 7f, 70e', 70e", 170e', 170e") and the actuating member (7a, 7d, 7b', 7b", 70a, 70b', 70b", 70d, 170a, 170e', 170e", 170d) together form a supporting element (7, 70, 170).

3. Folding table according to according to claim 2, wherein the supporting element (7, 70, 170) is guided with a linear guide (6g, 7a, 70a, 70a', 160g, 170a, 170g) on the tabletop (6, 60, 160) and, in its non-working position, is received essentially in recesses (6g, 61, 60b') of the tabletop (6, 60, 160).

4. Folding table according to according to claim 3, wherein the linear guide (6g, 7a, 70a', 160g, 170a, 170g) comprises a guide rail (6g, 160g), which is disposed on the tabletop (6, 60, 160) approximately centrally between the lateral end faces (6e, 6f, 60e, 60, 160e, 160f) and parallel to these, and in which a guide shaft (7a, 70a, 170a) disposed on the supporting element (7, 70, 170) is guided.

5. Folding table according to either one of the claims 3 or 4, wherein the supporting element (7, 70, 170) has a supporting plate (7d, 70d, 170d) aligned approximately parallel with the rear end face (6c, 60c, 160c) of the tabletop (6, 60, 160) at the end of the guide shaft (7a, 70a, 170a) facing away from the vehicle seat part (1a, 1b, 1c, 10a, 10b, 10c, 110a, 110b, 110c), wherein this supporting element (7, 70, 170) extends approximately the same distance toward the two lateral end faces (6e, 6f, 60e, 60f, 160e, 160f) on both sides of the guide shaft (7a, 70a, 170a).

6. Folding table according to claim 5, wherein the propping elements (7e, 7f, 70e', 70e", 170e', 170e") that rest on the vehicle seat part (1a, 1b, 1c, 10a, 10b, 10c, 110a, 110b, 110c) are disposed at the two free ends of the supporting plate (7d, 70d, 170d).

7. Folding table according to any one of the claims 2 to 6, wherein grip strips (7b', 7b", 70b', 70b") are disposed on the supporting element (7, 70, 170) with which the supporting element (7, 70, 170) can be moved in both directions.

8. Folding table according to any one of the claims 2 to 7, wherein a recess (6g, 60b') is provided on the underside (6b, 60b, 160b) of the tabletop (6, 60, 160) in which the release button (7b, 70b, 170b) and the grip strips (7b', 7b", 70b', 70b") are accessible along the entire displacement path of the supporting element (7, 70, 170).

9. Folding table according to any one of the claims 1 to 8, wherein the latching device (6h, 7b, 7c, 70b, 160h, 170i, 170b) comprises a toothed rack (6h, 160h) disposed on the tabletop (6, 60, 160) into which a locking element (7c, 170i) disposed on the supporting element (7, 70, 170) engages and can be disengaged from the toothed rack (6h, 160h) with a release button (7b, 70b, 170b).

10. Folding table according to the claim 9, wherein the release button (7b, 70b, 170b) is positioned near to the end of the guide shaft (7a, 70a, 170a) that faces away from the front end face (6d, 60d, 160d) of the tabletop (6, 60, 160).

11. Folding table according to any one of the claims 1 to 10, wherein the carrier element (4, 40, 140) is connected to the fastening device (2a, 2b, 2c, 2d, 20a, 20b, 20c, 20c', 20d, 20d', 120a, 120b, 120c, 120d) via a coupling (2b, 2c, 20b, 20c, 20c', 120b, 120c, 120c') with a manually releasable latching device (2d, 20d, 20d', 120d, 120d').

12. Folding table according to claim 11, wherein the coupling (2b, 2c, 20b, 20c, 20c', 120b, 120c, 120c') comprises a receiving socket (2b, 20b, 120b) disposed on a fastening element (2a, 20a, 120a) and a plug element (2c, 20c, 20c', 120c, 120c') connected to the carrier element (4, 40, 140) that can be plugged into the receiving socket (2b, 20b, 120b) and latched.

13. Folding table according to claim 12, wherein the fastening element (2a, 20a, 120a) is constituted as a clamping element that can be clamped between the two bars of the head support mounting (1c, 10c, 110c), and wherein the receiving socket (2b, 20b, 120b) is disposed approximately centrally on the clamping element.

## Revendications

1. Table pliante destinée à être montée sur la face arrière d'une partie de siège de véhicule, tel qu'un dossier (1a, 10a, 110a), un appui-tête (1b, 10b, 110b) ou un support d'appui-tête (1c, 10b, 110c) d'un siège de véhicule (1, 10, 110), comprenant un dispositif de fixation (2a, 2b, 2c, 2d, 20a, 20b, 20c, 20d, 120a, 120b, 120c, 120d) destiné à fixer la table pliante sur la partie de siège de véhicule (1a, 1b, 1c, 10a, 10b, 10c, 110a, 110b, 110c), un élément porteur (4, 40, 140) qui est relié au dispositif de fixation (2a, 2b, 2c, 2d, 20a, 20b, 20c, 20d, 120a, 120b, 120c, 120d) et qui s'étend vers le bas à partir du dispositif de fixation (2a, 2b, 2c, 2d, 20a, 20b, 20c, 20d, 120a, 120b, 120c, 120d), un plateau de table (6, 60, 160) qui est relié à rotation, via une première articulation (5, 50, 50', 50'', 150', 150'', 150a, 150b', 150b'', 150c, 150d), audit élément porteur (4, 40, 140), à l'extrémité inférieure (4d, 40d, 140d) de l'élément porteur (4, 40, 140), et qui peut exercer un pivotement aller-retour entre une position de non-utilisation dans laquelle le plateau de table (6, 60, 160) est orienté à peu près parallèlement à l'élément porteur (4, 40, 140) et une position d'utilisation dans laquelle le plateau de table (6, 60, 160) et ledit élément porteur (4, 40, 140) forment entre eux un angle compris entre environ 80° et 120°, ledit élément porteur (4, 40, 140) étant relié au dispositif de fixation (2a, 2b, 2c, 2d, 20a, 20b, 20c, 20d, 120a, 120b, 120c, 120d) par l'intermédiaire d'une deuxième articulation (3, 30, 130) dont l'axe de rotation s'étend parallèlement à l'axe de rotation de la première articulation (5, 50, 50', 50'' 150', 150'', 150a, 150b', 150b", 150c, 150d), et des éléments d'appui (7e, 7f, 70e', 70e'', 170e', 170e'') étant disposés sur ledit plateau de table (6, 60, 160) de manière symétrique par rapport au milieu de la face frontale arrière (6c, 60c, 160c) du plateau de table, qui, dans la position d'utilisation du plateau de table (6, 60, 160), sont mobiles en direction de la partie de siège de véhicule (1a, 1b, 1c, 10a, 10b, 10c, 110a, 110b, 110c) par l'intermédiaire d'un organe commun de commande (7a, 7d, 7b', 7b", 70a, 70b', 70b", 70d, 170a, 170e', 170e'', 170d) et peuvent être bloqués dans des positions différentes par l'intermédiaire d'un dispositif d'encliquetage (6h, 7b, 7c, 70b, 160h, 170i, 170b) apte à être débloqué manuellement, de sorte que le plateau de table (6, 60, 160) puisse être orienté dans une position horizontale et soit appuyé contre des contraintes sur la partie de siège de véhicule (1a, 1b, 1c, 10a, 10b, 10c, 110a, 110b, 110c).

2. Table pliante selon la revendication 1, dans laquelle les éléments d'appui (7e, 7f, 70e', 70e'', 170e', 170e'') et ledit organe de commande (7a, 7d, 7b', 7b'', 70a, 70b', 70b'', 70d, 170a, 170e', 170e'', 170d) forment ensemble un élément de support (7, 70, 170).

3. Table pliante selon la revendication 2, dans laquelle ledit élément de support (7, 70, 170) est guidé par un guidage linéaire (6g, 7a, 70a, 70a', 160g, 170a, 170g) sur le plateau de table (6, 60, 160) et est logé, dans sa position de non-utilisation, pour l'essentiel dans des évidements (6g, 61, 60b') du plateau de table (6, 60, 160).

4. Table pliante selon la revendication 3, dans laquelle ledit guidage linéaire (6g, 7a, 70a, 70a', 160g, 170a, 170g) comprend un rail de guidage (6g, 60g) qui est disposé sur le plateau de table (6, 60, 160) à peu près de manière centrale entre les faces frontales latérales (6e, 6f, 60e, 60f, 160e, 160f) et parallèlement à celles-ci et dans lequel est guidée une tige de guidage (7a, 70a, 170a) disposée sur ledit élément de support (7, 70, 170).

5. Table pliante selon la revendication 3 ou 4, dans laquelle, à l'extrémité de la tige de guidage (7a, 70a, 170a) qui montre vers la partie de siège de véhicule (1a, 1b, 1c, 10a, 10b, 10c, 110a, 110b, 110c), ledit élément de support (7, 70, 170) présente une plaque d'appui (7d, 70d, 170d) qui est orientée à peu près parallèlement à la face frontale arrière (6c, 60c, 160c) du plateau de table (6, 60, 160) et qui s'étend de part et d'autre de la tige de guidage (7a, 70a, 170a) à peu près sur la même distance vers les deux faces frontales latérales (6e, 6f, 60e, 60f, 160e, 160f).

6. Table pliante selon la revendication 5, dans laquelle les éléments d'appui (7e, 7f, 70e', 70e'', 170e', 170e'') qui prennent appui sur la partie de siège de véhicule (1a, 1b, 1c, 10a, 10b, 10c, 110a, 110b, 110c) sont disposés sur les deux extrémités libres de la plaque d'appui (7d, 70d, 170d).

7. Table pliante selon l'une quelconque des revendications 2 à 6, dans laquelle des barrettes de préhension (7b', 7b'', 70b', 70b") sont disposées sur ledit élément de support (7, 70, 170), au moyen desquelles l'élément de support (7, 70, 170) peut être déplacé dans les deux directions.

8. Table pliante selon l'une quelconque des revendications 2 à 7, dans laquelle une découpe (6g, 60b') est prévue sur la face inférieure (6b, 60b, 160b) du plateau de table (6, 60, 160), où la touche de déblocage (7b, 70b, 170b) et les barrettes de préhension (7b', 7b'', 70b', 70b'') sont accessibles sur l'ensemble du chemin de déplacement de l'élément de support (7, 70, 170).

9. Table pliante selon l'une quelconque des revendications 1 à 8, dans laquelle ledit dispositif d'encliquetage (6h, 7b, 7c, 70b, 160h, 170i, 170b) comprend une crémaillère (6h, 160h) qui est disposée sur le plateau de table (6, 60, 160) et dans laquelle s'engage un élément de verrouillage (7c, 170i) qui est disposé sur l'élément de support (7, 70, 170) et qui peut être mis hors prise de la crémaillère (6h, 160h) par le biais d'une touche de déblocage (7b, 70b, 170b).

10. Table pliante selon la revendication 9, dans laquelle ladite touche de déblocage (7b, 70b, 170b) est disposée près de l'extrémité de la tige de guidage (7a, 70a, 170a), qui montre vers la face frontale avant (6d, 60d, 160d) du plateau de table (6, 60, 160).

11. Table pliante selon l'une quelconque des revendications 1 à 10, dans laquelle ledit élément porteur (4, 40, 140) est relié au dispositif de fixation (2a, 2b, 2c, 2d, 20a, 20b, 20c, 20c', 20d, 20d', 120a, 120b, 120c, 120d) par l'intermédiaire d'un accouplement (2b, 2c, 20b, 20c, 20c', 120b, 120c, 120c') ayant un dispositif de verrouillage (2d, 20d, 20d', 120d, 120d') apte à être débloqué manuellement.

12. Table pliante selon la revendication 11, dans laquelle ledit accouplement (2b, 2c, 20b, 20c, 20c', 120b, 120c, 120c') comprend une douille de logement (2b, 20b, 120b) disposée sur un élément de fixation (2a, 20a, 120a) ainsi qu'un élément mâle (2c, 20c, 20c', 120c, 120c') qui est relié à l'élément porteur (4, 40, 140) et qui peut être engagé dans ladite douille de logement (2b, 20b, 120b) et être verrouillé.

13. Table pliante selon la revendication 12, dans laquelle ledit élément de fixation (2a, 20a, 120a) est réalisé comme élément de serrage qui peut être serré entre les deux tiges du support d'appui-tête (1c, 10c, 110c), et dans laquelle ladite douille de logement (2b, 20b, 120b) est disposée à peu près de manière centrale sur l'élément de serrage.
